# EUROPEAN PATENT APPLICATION

(11) **EP 3 706 203 A1**
(43) Date of publication of application: **09.09.2020**
(21) Application number: 18872120.3
(22) Date of filing: 29.10.2018
(51) Int. Cl.: H01M 2/26

(54) **BATTERY**

(30) Priority: 30.10.2017 JP 2017209618
(71) Applicant: Kabushiki Kaisha Toshiba, Minato-ku Tokyo 105-0023 (JP)
(72) Inventor: MAMYODA, Hirokiyo, Minato-ku Tokyo 105-0023 (JP); MURATA, Masahiro, Minato-ku Tokyo 105-0023 (JP); IWAMURA, Naoki, Minato-ku Tokyo 105-0023 (JP); NEGISHI, Nobuyasu, Minato-ku Tokyo 105-0023 (JP); OBARA, Takashi, Tokyo 105-0023 (JP); SAKAI, Tetsuo, Tokyo 105-0023 (JP)
(74) Representative: Hoffmann Eitle
(86) International application number: PCT/JP2018/040193
(87) International publication number: WO 2019/088047

(57) **Abstract**

According to one embodiment, a battery includes a casing, a terminal, an electrode assembly, a collector, and a joint. The terminal is supported by the casing. The electrode assembly is housed in the casing and includes an electrode pair of a sheet form having different polarities from each other and a separator located between the electrode pair, the electrode pair and the separator laminated and wound around an axis. The collector is located at an axial end of the electrode assembly, electrically connected to the terminal, and includes a plurality of collector tabs. The collector tabs are part of one of the electrodes and laminated on each other with no other electrode and the separator placed in-between. The joint joins fringes of the laminated collector tabs.

## Description

### TECHNICAL FIELD

Embodiments of the present invention relate generally to a battery.

### BACKGROUND ART

Conventionally, batteries are known, which include an electrode assembly of a sheet-form electrode pair and a separator located between the electrode pair, the electrode pair and the separator laminated and wound around; and a collector located in the electrode assembly including multiple parts of the electrodes placed on the top of each other.

### CITATION LIST

### Patent Literature

Patent Document 1: Japanese Patent No. 4515373

### SUMMARY OF INVENTION

### PROBLEM TO BE SOLVED BY THE INVENTION

It is preferable to provide such batteries of a new configuration with improved vibration resistance.

### MEANS FOR SOLVING PROBLEM

According to one embodiment, a battery includes a casing, a terminal, an electrode assembly, a collector, and a joint. The terminal is supported by the casing. The electrode assembly is housed in the casing and includes an electrode pair of a sheet form having different polarities from each other and a separator located between the electrode pair, the electrode pair and the separator laminated and wound around an axis. The collector is located at an axial end of the electrode assembly, electrically connected to the terminal, and includes a plurality of collector tabs. The collector tabs are part of one of the electrodes and laminated on each other with no other electrode and the separator placed in-between. The joint joins fringes of the laminated collector tabs.

### BRIEF DESCRIPTION OF DRAWINGS

FIG. 1 is a schematic illustrative perspective view of a battery in a first embodiment;
FIG. 2 is a schematic illustrative exploded perspective view of the battery in the first embodiment;
FIG. 3 is a schematic illustrative exploded perspective view of the electrode assembly of the battery in the first embodiment and illustrates the electrode assembly partially developed;
FIG. 4 is a schematic illustrative diagram of a collector of the electrode assembly in the first embodiment as viewed from the axial direction of the axis;
FIG. 5 is partial schematic illustrative cross-sectional view of the electrode assembly in the first embodiment;
FIG. 6 is partial schematic illustrative cross-sectional view of the collector in the first embodiment;
FIG. 7 is partial schematic illustrative cross-sectional view of the collector in the first embodiment;
FIG. 8 is a schematic illustrative perspective view of the electrode assembly during a manufacturing process in the first embodiment;
FIG. 9 is a schematic illustrative front view of the electrode assembly during a manufacturing process in the first embodiment;
FIG. 10 is a schematic illustrative plan view of the electrode assembly during a manufacturing process in the first embodiment;
FIG. 11 is a schematic illustrative side view of the electrode assembly during a manufacturing process in the first embodiment;
FIG. 12 is a schematic illustrative plan view of the electrode assembly of the battery in a second embodiment;
FIG. 13 is a schematic illustrative plan view of the electrode assembly of the battery in a third embodiment;
FIG. 14 is a schematic illustrative front view of the electrode assembly of the battery in a fourth embodiment;
FIG. 15 is a schematic illustrative side view of the electrode assembly of the battery in the fourth embodiment;
FIG. 16 is a schematic illustrative front view of the electrode assembly of the battery in a fifth embodiment;
FIG. 17 is a schematic illustrative side view of the electrode assembly of the battery in the fifth embodiment;
FIG. 18 is a schematic illustrative front view of the electrode assembly of the battery in a sixth embodiment;
FIG. 19 is a schematic illustrative side view of the electrode assembly of the battery in the sixth embodiment;
FIG. 20 is a schematic illustrative front view of the electrode assembly of the battery in a seventh embodiment;
FIG. 21 is a schematic illustrative side view of the electrode assembly of the battery in the seventh embodiment;
FIG. 22 is a schematic illustrative front view of the electrode assembly of the battery in an eighth embodiment;
FIG. 23 is a schematic illustrative side view of the electrode assembly of the battery in the eighth embodiment;
FIG. 24 is a schematic illustrative front view of the electrode assembly of the battery in a ninth embodiment;
FIG. 25 is a schematic illustrative side view of the electrode assembly of the battery in the ninth embodiment;
FIG. 26 is a schematic illustrative perspective view of the electrode assembly of the battery in the ninth embodiment;
FIG. 27 is a schematic illustrative front view of the electrode assembly of the battery in a tenth embodiment;
FIG. 28 is a schematic illustrative side view of the electrode assembly of the battery in the tenth embodiment;
FIG. 29 is a schematic illustrative front view of the electrode assembly of the battery in an eleventh embodiment;
FIG. 30 is a schematic illustrative side view of the electrode assembly of the battery in the eleventh embodiment;
FIG. 31 is a schematic illustrative front view of the electrode assembly of the battery in a twelfth embodiment;
FIG. 32 is a schematic illustrative front view of the electrode assembly of the battery in a thirteenth embodiment;
FIG. 33 is a schematic illustrative side view of the electrode assembly of the battery in the thirteenth embodiment;
FIG. 34 is a schematic cross-sectional view taken along line XXXIV-XXXIV in FIG. 33;
FIG. 35 is a schematic illustrative front view of the electrode assembly of the battery in a fourteenth embodiment;
FIG. 36 is a schematic illustrative side view of the electrode assembly of the battery in the fourteenth embodiment;
FIG. 37 is a schematic cross-sectional view taken along line XXXVII-XXXVII in FIG. 36;
FIG. 38 is a schematic illustrative front view of the electrode assembly of the battery in a fifteenth embodiment;
FIG. 39 is a schematic illustrative side view of the electrode assembly of the battery in the fifteenth embodiment;
FIG. 40 is a schematic cross-sectional view taken along line XL-XL in FIG. 39;
FIG. 41 is a schematic illustrative front view of the electrode assembly of the battery in a sixteenth embodiment; and
FIG. 42 is a schematic illustrative side view of the electrode assembly of the battery in the sixteenth embodiment.

### DETAILED DESCRIPTION

Embodiments will be described below with reference to the drawings. Exemplary embodiments below include same or similar elements. Hereinafter, same or similar elements are denoted by common reference numerals and an overlapping description thereof is omitted.

In the respective drawings, directions are defined for the sake of convenience. X direction is along the short side (thickness) of a casing 20 of a battery 10, Y direction is along the long side (width) of the casing 20, and Z direction is along the vertical side (height) of the casing 20. The X direction, the Y direction, and the Z direction are orthogonal to one another. In the following, the extending direction of an axis Ax is simply referred to as axial direction. In this specification, ordinal numbers are assigned for the sake of distinguishing members (or parts) and locations and are not intended to indicate priority or order.

The elements (technical features) of the following embodiments and the operation and effects achieved by the elements are merely exemplary. The present invention can be implemented by other elements than the elements disclosed below and can attain at least one of various effects attained by basic elements.

### <First Embodiment>

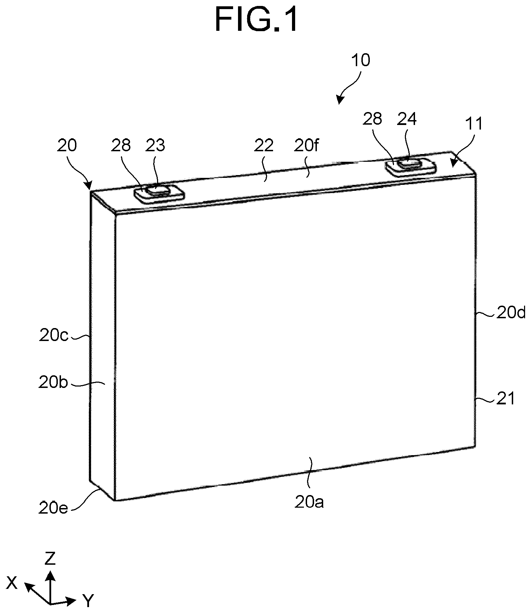

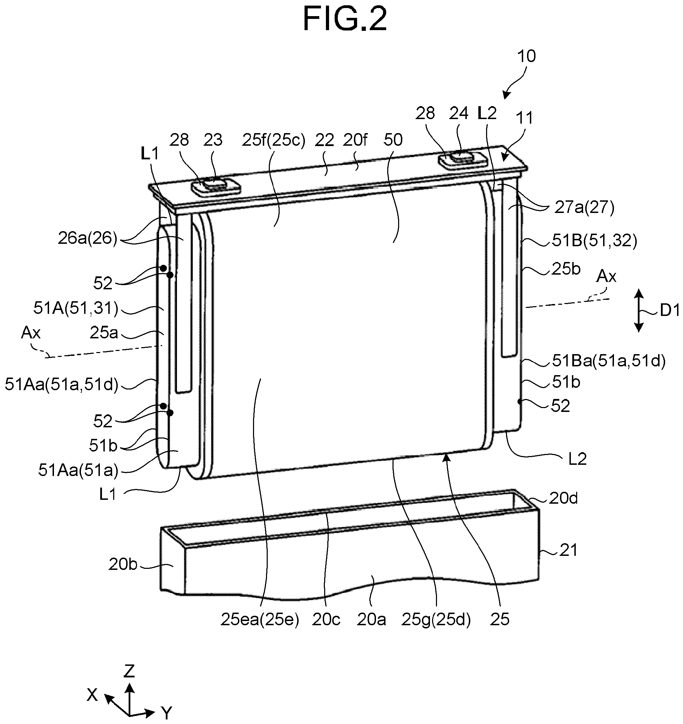

FIG. 1 is a schematic illustrative perspective view of a battery 10 in the present embodiment. FIG. 2 is a schematic illustrative exploded perspective view of the battery 10 in the present embodiment. As illustrated in FIGS. 1 and 2, the battery 10 includes a casing 20, a positive electrode terminal 23, a negative electrode terminal 24, an electrode assembly 25, a positive electrode lead 26, and a negative electrode lead 27. The battery 10 represents, for example, a lithium-ion secondary battery. The positive electrode terminal 23 and the negative electrode terminal 24 are exposed to the outside of the casing 20 and supported by the casing 20. The electrode assembly 25, the positive electrode lead 26, and the negative electrode lead 27 are housed in the casing 20. The positive electrode terminal 23 and the negative electrode terminal 24 are exemplary terminals. The positive electrode terminal 23 and the negative electrode terminal 24 are also referred to as electrode terminals.

The casing 20 has a flat, thin rectangular parallelepiped shape in the X direction. The casing 20 includes a plurality of walls 20a to 20f. Both of the wall 20a and the wall 20c extend in a direction (in the present embodiment, for example, orthogonal direction, YZ plane) intersecting the thickness (X direction) of the casing 20. The wall 20a and the wall 20c are spaced apart from each other in parallel along the thickness (X direction) of the casing 20. Both of the wall 20b and the wall 20d extend in a direction (in the present embodiment, for example, orthogonal direction, XZ plane) intersecting the width (Y direction) of the casing 20. The wall 20b and the wall 20d are spaced apart from each other in parallel along the width (Y direction) of the casing 20. The walls 20a to 20d are also referred to as sidewalls, for example. The walls 20a and 20c are exemplary long sides of the sidewalls, and the walls 20b and 20d are exemplary short sides of the sidewalls. Both of the wall 20e and the wall 20f extend in a direction (in the present embodiment, for example, orthogonal direction, XY plane) intersecting the vertical direction (Z direction) of the casing 20. The wall 20e and the wall 20f are spaced apart from each other in parallel in the vertical direction (Z direction) of the casing 20. The wall 20e is also referred to as a lower wall or a bottom wall, for example. The wall 20f is also referred to as an upper wall or a top wall, for example. The casing 20 is also referred to as an outer casing or a case.

The casing 20 may be an assembly of a plurality of parts (divided elements). Specifically, in the present embodiment, the casing 20 includes an accommodating member 21 including at least the walls 20a to 20e and a cover member 22 including at least the wall 20f. Inside the accommodating member 21 is a hollow to accommodate the electrode assembly 25, the positive electrode lead 26, and the negative electrode lead 27. That is, the accommodating member 21 has a rectangular parallelepiped box shape with an opening at one end (top end). The cover member 22 has a quadrangular (rectangular) plate shape and is coupled (joined) to the accommodating member 21 with the opening of the accommodating member 21 closed. The accommodating member 21 and the cover member 22 are coupled together in an air-tight and liquid-tight manner, for example, by welding. The accommodating member 21 and the cover member 22 are formed of, for example, a metal material (such as aluminum, aluminum alloy, stainless steel). An insulating member may be attached to the inner surface of the walls 20a to 20e, to insulate the accommodating member 21 from the elements inside, such as the positive electrode lead 26 and the negative electrode lead 27. The insulating member may include, for example, an insulating sheet or a molded product. The accommodating member 21 and the cover member 22 are also referred to as a casing member.

As illustrated in FIG. 2, the positive electrode terminal 23, the negative electrode terminal 24, the electrode assembly 25, the positive electrode lead 26, and the negative electrode lead 27 are attached to the cover member 22. The cover member 22, the positive electrode terminal 23, the negative electrode terminal 24, the electrode assembly 25, the positive electrode lead 26, and the negative electrode lead 27 constitute a cover assembly 11.

The positive electrode terminal 23 and the negative electrode terminal 24 are mounted on the cover member 22 (wall 20f). Specifically, the positive electrode terminal 23 is located at one longitudinal end of the cover member 22 (Y direction, along the width of the casing 20). The negative electrode terminal 24 is located on the other longitudinal end of the cover member 22 (Y direction, along the width of the casing 20). The positive electrode terminal 23 is supported by the wall 20f (casing 20), passing through the wall 20f, and is coupled to the positive electrode lead 26 inside the casing 20. That is, the positive electrode terminal 23 is electrically connected to the positive electrode lead 26. The negative electrode terminal 24 is supported by the wall 20f (casing 20), passing through the wall 20f, and is coupled to the negative electrode lead 27 inside the wall 20f (casing 20). That is, the negative electrode terminal 24 is electrically connected to the negative electrode lead 27.

Seal members 28 (gasket, interposer) extend between the positive electrode terminal 23 and the wall 20f and between the negative electrode terminal 24 and the wall 20f. The seal members 28 are formed of an insulator such as a synthetic resin material and glass. The seal members 28 air-tightly and liquid-tightly seal in-between the wall 20f, and the positive electrode terminal 23 and the negative electrode terminal 24 for electrical insulation. The wall 20f is provided with a liquid inlet (not illustrated) in-between the positive electrode terminal 23 and the negative electrode terminal 24. An electrolyte is injected into the casing 20 through the liquid inlet. The liquid inlet is closed after injection of the electrolyte.

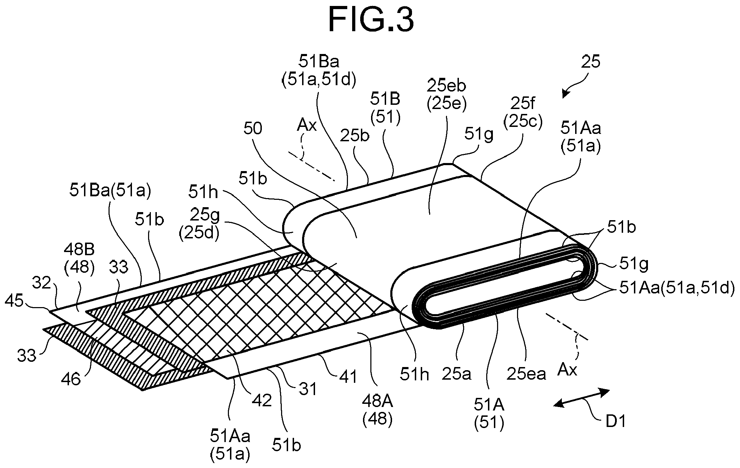

FIG. 3 is a schematic illustrative exploded perspective view of the electrode assembly 25 of the battery 10 in the present embodiment, with the electrode assembly 25 partially developed. As illustrated in FIG. 3, the electrode assembly 25 includes a sheet-form positive electrode 31, a sheet-form negative electrode 32, and a plurality of sheet-form separators 33. The electrode assembly 25 functions as a power generator element. In FIG. 3, the separator 33 is illustrated by hatching for the sake of better understanding. The positive electrode 31 and the negative electrode 32 are an exemplary electrode pair having different polarities. The electrode assembly 25 is also referred to as an electrode group or a wound element.

In the electrode assembly 25 the positive electrode 31, the negative electrode 32, and the separators 33 extending between the positive electrode 31 and the negative electrode 32 are placed on the top of each other and wound around, and the electrode assembly 25 has a flat appearance. That is, the positive electrode 31 and the negative electrode 32 are laminated with the separator 33 in-between them. The number of windings of the positive electrode 31, the negative electrode 32, and the separators 33 are, for example, 38. The number of windings of the positive electrode 31, the negative electrode 32, and the separators 33 are not limited to 38. The positive electrode 31 and the negative electrode 32 are separated from each other by the separator 33. The positive electrode 31 is located between two separators 33. The positive electrode 31, the negative electrode 32, and the separators 33 are laminated, spirally wound around the axis Ax, and pressed into a flat form, thereby forming the electrode assembly 25. The electrode assembly 25 is accommodated in the casing 20 in such a posture that the axis Ax is along the width (Y direction) of the casing 20. The axis Ax is also referred to as a center line or winding center line.

As illustrated in FIGS. 2 and 3, the electrode assembly 25 has axial opposite ends 25a and 25b and opposite ends 25c and 25d in a first direction D1 intersecting (orthogonal to) the axial direction. The first direction D1 is the vertical direction (Z direction) of the casing 20. The end 25c is one end (upper side) of the electrode assembly 25 in the first direction D1. The end 25d is the other end (lower side) of the electrode assembly 25 in the first direction D1.

The electrode assembly 25 includes a base 25e and a turnback pair 25f and 25g. The base 25e and the turnback pair 25f and 25g each include the positive electrode 31, the negative electrode 32, and the separators 33. The base 25e includes an extension pair 25ea and 25eb of the positive electrode 31, the negative electrode 32, and the separators 33 extending in the first direction D1. Each of the extensions 25ea and 25eb extends between the opposite ends 25c and 25d of the electrode assembly 25 in the first direction D1. The axis Ax is located between the extensions 25ea and 25eb. In each of the extensions 25ea and 25eb, the positive electrode 31, the negative electrode 32, and the separators 33 extend in the first direction D1, and are not folded back. The base 25e is also referred to as a linear part or intermediate part, and the turnbacks 25f and 25g are also referred to as a R-shaped part.

The turnback pair 25f and 25g is located at the opposite ends 25c of the electrode assembly 25 25d in the first direction D1. In each of the turnbacks 25f and 25g, the positive electrode 31, the negative electrode 32, and the separators 33 are folded back from one of the extension pair 25ea and 25eb to the other. That is, the turnback pair 25f and 25g is connected to the opposite ends of the base 25e in the first direction D1. The turnback pair 25f and 25g is connected through the base 25e. That is, the base 25e is located between the turnback pair 25f and 25g.

As illustrated in FIG. 3, the positive electrode 31 includes a positive collector 41 and a positive active-material-containing layer 42. In FIG. 3 the positive active-material-containing layer 42 is illustrated by hatching, for the sake of better understanding. The positive collector 41 is an exemplary collector, and the positive active-material-containing layer 42 is an exemplary active material-containing layer. The positive collector 41 is also referred to as a substrate, a sheet, or a conductor.

The positive collector 41 is formed of a metal foil such as an aluminum foil or an aluminum alloy. That is, the positive collector 41 contains aluminum. The positive collector 41 is of an approximately rectangular (quadrangular) sheet (strip) form. The positive collector 41 may be formed of any other material or in any other shape.

The positive active-material-containing layer 42 is located on both surfaces (front surface and back surface) of the positive collector 41. The positive active-material-containing layer 42 may be formed on one surface of the positive collector 41. The positive active-material-containing layer 42 partially covers both surfaces of the positive collector 41. That is, the positive active-material-containing layer 42 is laminated on part of the positive collector 41. In the longitudinal direction the positive active-material-containing layer 42 is substantially the same in length as the positive collector 41. In the lateral direction, the positive active-material-containing layer 42 is shorter in length (width) than the positive collector 41.

The positive collector 41 includes a positive non-layered part 48A. Of the positive collector 41, the positive non-layered part 48A has no positive active-material-containing layer 42 laminated thereon. The positive non-layered part 48A is located at one width end of the strip-form positive collector 41. The other width end of the positive collector 41 is covered with the positive active-material-containing layer 42. The positive non-layered part 48A extends in parallel with the positive collector 41 and the positive active-material-containing layer 42. The positive non-layered part 48A is an exemplary non-layered part. The positive non-layered part 48A is also referred to as a non-coated part.

The positive active-material-containing layer 42 contains a positive electrode active material, a conductive agent, and a binder (binding agent). The positive active-material-containing layer 42 is formed by, for example, suspending a positive electrode active material, a conductive agent, and a binder in a solvent and coating, drying, and pressing the suspension (slurry) onto the positive collector 41.

The positive electrode active material represents, for example, a variety of oxides or sulfides. Examples of the positive electrode active material include manganese dioxide (MnO₂), iron oxide, copper oxide, nickel oxide, a lithium manganese composite oxide (for example, LiₓMn₂O₄ or LiₓMnO₂), a lithium nickel composite oxide (for example, LiₓNiO₂), a lithium cobalt composite oxide (LiₓCoO₂), a lithium nickel cobalt composite oxide (for example, LiₓNi_{1-y-z}Co_{y}M_{z}O₂ where M is at least one element of a Al, Cr, and Fe group and 0 ≤ y ≤ 0.5, 0 ≤ z ≤ 0.1), a lithium manganese cobalt composite oxide (for example, LiₓMn_{1-y-z}Co_{y}M_{z}O₂ where M is at least one of a Al, Cr, and Fe group and 0 ≤ y ≤ 0.5, 0 ≤ z ≤ 0.1), a lithium manganese nickel composite compound (for example, LiₓMn_{y}Ni_{y}M_{1-2y}O₂ such as LiₓMn_{1/3}Ni_{1/3}Co_{1/3}O₂ and LiₓMn_{1/2}Ni_{1/2}O₂ where M is at least one of a Co, Cr, Al, and Fe group where 1/3 ≤ y ≤ 1/2), a spinel-type lithium manganese nickel composite oxide (for example, LiₓMn_{2-y}Ni_{y}O₄), a lithium phosphate having the olivine structure (for example, LiₓFePO₄, LiₓFe_{1-y}Mn_{y}PO₄, LiₓCoPO₄), iron sulfate (for example, Fe₂(SO₄)₃), or vanadium oxide (for example, V₂O₅). The positive electrode active material may be a conductive polymer material such as polyaniline and polypyrrole, a disulfide-based polymer material, sulfur (S), and an organic material such as carbon fluoride and an inorganic material. Regarding x, y, and z whose preferable range is not specified, they are preferably in the range of 0 or above to 1 or less.

Examples of more preferable positive electrode active material include lithium manganese composite oxides, lithium nickel composite oxides, lithium cobalt composite oxides, lithium nickel cobalt composite oxides, lithium manganese nickel composite compounds, spinel-type lithium manganese nickel composite oxides, lithium manganese cobalt composite oxides, and lithium iron phosphates. The battery 10 containing these positive electrode active materials provides a higher voltage.

Examples of the conductive agent include one or two or more among acetylene black, carbon black, graphite, coke, carbon fibers, and graphene. Examples of the binder include polytetrafluoroethylene (PTFE), polyvinylidene fluoride (PVDF), fluoro rubber, styrene-butadiene rubber, ethylene-butadiene rubber (SBR), polypropylene (PP), polyethylene (PE), carboxymethylcellulose (CMC), polyimide (PI), polyacrylic-imide (PAI), a modified PVDF in which at least one of hydrogen and fluorine of PVDF is substituted with another substituent, a vinylidene fluoride-hexafluoropropylene copolymer, a polyvinylidene fluoride-tetrafluoroethylene-hexafluoropropylene terpolymer, and acrylic resin. One or two or more kinds of binders can be used.

As illustrated in FIG. 3, the negative electrode 32 includes a negative collector 45 and a negative active-material-containing layer 46. In FIG. 3, the negative active-material-containing layer 46 is illustrated by hatching, for the sake of better understanding. The negative collector 45 is an exemplary collector, and the negative active-material-containing layer 46 is an exemplary active material-containing layer. The negative collector 45 is also referred to as a substrate, a sheet, or a conductor.

The negative collector 45 is formed of, for example, a metal foil such as a copper foil, an aluminum foil, and an aluminum alloy foil. That is, the negative collector 45 made of an aluminum foil or an aluminum alloy foil contains aluminum. The negative collector 45 is of an approximately rectangular (quadrangular) sheet (strip) form. The negative collector 45 may be formed of any other material or in any other shape.

The negative active-material-containing layer 46 is attached to both surfaces of the negative collector 45. Specifically, the negative active-material-containing layer 46 is laminated on part of the negative collector 45. The negative active-material-containing layer 46 may be formed on one surface of the negative collector 45. The negative active-material-containing layer 46 is to be formed on the surface facing the positive active-material-containing layer 42. The negative active-material-containing layer 46 partially covers the surfaces of the negative collector 45. That is, the negative active-material-containing layer 46 is laminated on part of the negative collector 45. In the longitudinal direction the negative active-material-containing layer 46 is substantially the same in length as the negative collector 45. In the lateral direction the negative active-material-containing layer 46 is shorter in length (width) than the negative collector 45.

The negative collector 45 includes a negative non-layered part 48B. Of the negative collector 45, the negative non-layered part 48B has no negative active-material-containing layer 46 laminated thereon. The negative non-layered part 48B is located at one width end of the strip-form negative collector 45. The other width end of the negative collector 45 is covered with the negative active-material-containing layer 46. The negative non-layered part 48B extends in parallel with the negative collector 45 and the negative active-material-containing layer 46. The negative non-layered part 48B is an exemplary non-layered part. The negative non-layered part 48B is also referred to as a non-coated part.

The negative active-material-containing layer 46 contains a negative electrode active material, a conductive agent, and a binder (binding agent). The negative active-material-containing layer 46 is formed by, for example, suspending a powdery negative electrode active material, a conductive agent, and a binder in a solvent and applying, drying, and pressing the suspension (slurry) onto the negative collector 45. Pressing serves to increase electrical contact between the negative electrode active material and the negative collector 45.

The negative electrode active material is not limited to particular materials. The negative electrode active material is, for example, a lithium titanium composite oxide (lithium titanate). Examples of the lithium titanium composite oxide include a spinel lithium titanate represented by Li₄₊ₓTi₅O₁₂ (x varies in the range of -1 ≤ x ≤ 3 due to charge/discharge reactions), a Ramsdellite Li₂₊ₓTi₃O₇ (x varies in the range of -1 ≤ x ≤ 3 due to charge/discharge reactions), or a metal composite oxide containing Ti and at least one of a P, V, Sn, Cu, Ni, and Fe group. Examples of the metal composite oxide containing Ti and at least one of a P, V, Sn, Cu, Ni, and Fe group include TiO₂-P₂O₅, TiO₂-V₂O₅, TiO₂-P₂O₅-SnO₂, TiO₂-P₂O₅-MeO (Me is at least one of a Cu, Ni, and Fe group), and TiO₂-P₂O₅-MO (M is at least one of a Cu, Ni, and Fe group). Preferably, this metal composite oxide has low crystallinity and a microstructure of coexisting crystal phase and amorphous phase or an amorphous phase alone. Such a metal composite oxide having a microstructure can significantly improve cycle performance. By insertion of lithium through charging, these metal composite oxides turn into a lithium titanium composite oxide. Of the lithium titanium composite oxides, spinel lithium titanate is preferable because of its excellent cycle characteristics. Preferably, the lithium titanium composite oxide (for example, spinel lithium titanate) contains one or more substances from a silicon and tin group.

The negative active-material-containing layer 46 may contain another negative electrode active material, for example, a graphitic material, a carbonaceous material or a metal compound. The graphitic material is, for example, graphite (natural graphite, artificial graphite). Examples the carbonaceous material include coke, carbon fibers (vapor deposition carbon fibers, mesophase pitch-based carbon fiber), spherical carbon, pyrolytic vapor deposition carbonaceous material, or resin baked carbon. More preferably, the carbonaceous materials may be vapor deposition carbon fibers, mesophase pitch-based carbon fibers, and spherical carbon.

The metal compound is, for example, metal sulfide or metal nitride. The metal sulfide is, for example, titanium sulfide such as TiS₂, molybdenum sulfide such as MoS₂, or iron sulfide such as FeS, FeS₂, and LiₓFeS₂. The metal nitride is, for example, lithium cobalt nitride (for example, LiₛCoₜN where 0 < s < 4, 0 < t < 0.5). Other examples of the negative electrode active material include chalcogen compounds (for example, titanium disulfide, molybdenum disulfide, niobium selenide) and light metal (for example, aluminum, aluminum alloy, magnesium alloy, lithium, lithium alloy).

The conductive agent is, for example, one or two or more among acetylene black, carbon black, graphite, coke, carbon fibers, and graphene. Examples of the binder include polytetrafluoroethylene (PTFE), polyvinylidene fluoride (PVDF), fluoro rubber, styrene-butadiene rubber, ethylene-butadiene rubber (SBR), polypropylene (PP), polyethylene (PE), carboxymethylcellulose (CMC), polyimide (PI), polyacrylic-imide (PAI), a modified PVDF in which at least one of hydrogen and fluorine of PVDF is substituted with another substituent, a vinylidene fluoride-hexafluoropropylene copolymer, a polyvinylidene fluoride-tetrafluoroethylene-hexafluoropropylene terpolymer, and acrylic resin. One or two or more kinds of binders can be used.

The positive non-layered part 48A and the negative non-layered part 48B protrude in opposite directions. That is, the positive non-layered part 48A protrudes in the axial direction (Y direction) from one end of the positive electrode 31, the negative electrode 32, and the separators 33 laminated and wound around, and the negative non-layered part 48B protrudes from the other end in the opposite axial direction (opposite to the Y direction). That is, the positive electrode 31 and the negative electrode 32 are laminated in a misaligned manner. Hereinafter, the positive non-layered part 48A and the negative non-layered part 48B may be collectively referred to as a non-layered part 48.

As illustrated in FIGS. 2 and 3, in the electrode assembly 25 as configured, the wound lamination of the positive electrode 31, the negative electrode 32, and the separators 33 serves as a flat-form power generator 50. The wound positive non-layered part 48A serves as a positive collector 51A extending from one end of the power generator 50. That is, the positive collector 51A includes part of the positive collector 41 on which the positive active-material-containing layer 42 is not laminated (positive non-layered part 48A). As is understood from the above, the positive collector 51A includes the positive electrode 31. The axial end 25a of the electrode assembly 25 is also the ends of the positive collector 41 and the positive non-layered part 48A. The positive collector 51A is electrically connected to the positive electrode terminal 23. The positive collector 51A is an exemplary collector.

The wound negative non-layered part 48B serves as a negative collector 51B extending from the other end of the power generator 50. That is, the negative collector 51B includes part of the negative collector 45 on which the negative active material-containing layer 46 is not laminated (negative non-layered part 48B). As is understood from the above, the negative collector 51B includes the negative electrode 32. The axial end 25b of the electrode assembly 25 is also the ends of the negative collector 45 and the negative non-layered part 48B. The negative collector 51B is electrically connected to the negative electrode terminal 24. Hereinafter, the positive collector 51A and the negative collector 51B may be collectively referred to as a collector 51. The negative collector 51B is an exemplary collector.

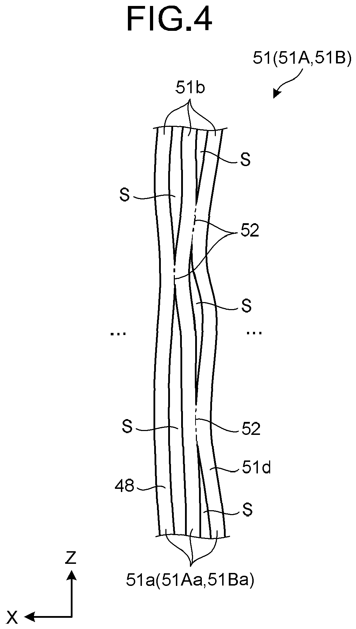

FIG. 4 is a schematic illustrative diagram of the collector 51 of the electrode assembly 25 in the present embodiment as viewed from the axial direction. As illustrated in FIGS. 3 and 4, the positive collector 51A includes a plurality of collector tabs 51Aa placed on the top of each other. The collector tabs 51Aa are part of the positive non-layered part 48A, i.e., the positive electrode 31, and laminated with no other electrode as the negative electrode 32 and the separator 33 interposed therebetween. The boundary between the collector tabs 51Aa may be located at the opposite ends of the positive collector 51A in the first direction D1, for example. In FIG. 2, the boundary between the collector tabs 51Aa is denoted by solid line L1. The position of the boundary is not limited thereto and may be set to any position. FIG. 4 depicts the positive collector 51A and the negative collector 51B in non-distinguishable manner since they have identical structures.

The negative collector 51B includes a plurality of collector tabs 51Ba placed on the top of each other. The collector tabs 51Ba are part of the negative non-layered part 48B, i.e., the negative electrode 32, and laminated with no other electrode as the positive electrode 31 and the separator 33 interposed therebetween. In the present embodiment, the boundary between the collector tabs 51Ba can be set, for example, at the opposite ends of the negative collector 51B in the first direction D1. In FIG. 2, the boundary between the collector tabs 51Ba is denoted by solid line L2. The position of the boundary is not limited thereto and may be set to any position. Hereinafter, the collector tabs 51Aa of the positive collector 51A and the collector tabs 51Ba of the negative collector 51B may be collectively referred to as collector tabs 51a.

As illustrated in FIGS. 2 and 3, in the present embodiment, the fringes 51b of the collector tabs 51a are included in the ends 25a and 25b of the collector 51 opposite the power generator 50, exposing therefrom. The fringes 51b of the laminated collector tabs 51a of each collector 51 are aligned with each other. In the present embodiment, the fringes 51b of the laminated collector tabs 51a are aligned in position in the axial direction. Specifically, the fringes 51b of the laminated collector tabs 51a are located at the same position in the axial direction. In other words, the fringes 51b of the laminated collector tabs 51a are located on a given plane intersecting (orthogonal to) the axial direction.

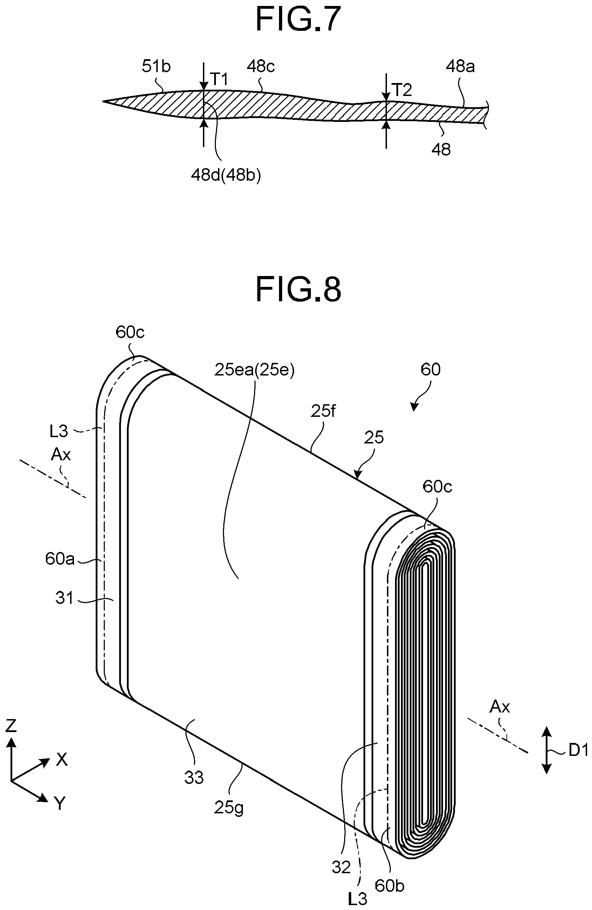

Each collector 51 is provided with a cut part 51d. In the ends 25a, 25b opposite the power generator 50 of the collector 51, the cut parts 51d extend between the opposite ends 51g and 51h of the collector 51 in the first direction D1. The cut parts 51d each include the fringes 51b of the collector tabs 51a. That is, the cut parts 51d form the ends 25a, 25b opposite the power generator 50 of the collector 51 and the fringes 51b of the collector tabs 51a. The cut part 51d is formed by melting and cutting a removal part 60c (FIG. 8) of the collector 51 from a base material 60 (FIG. 8) of the electrode assembly 25 during manufacture of the electrode assembly 25. The cut part 51d is also referred to as a cut location or a cut surface.

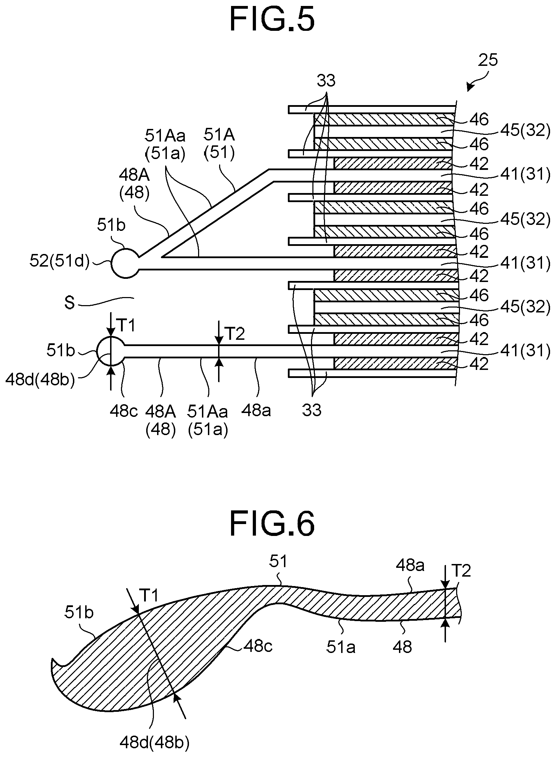

FIG. 5 is a partial schematic cross-sectional view of the electrode assembly 25 in the present embodiment, by way of example. As illustrated in FIGS. 2, 4, and 5, each collector 51 includes a joint 52. FIGS. 4 and 5 illustrate a gap S between two adjacent collector tabs 51a in an exaggerated manner for the sake of better understanding. The joint 52 works to combine the fringes 51b of the laminated collector tabs 51a of the collector 51. The joint 52 is formed by melting and solidifying the fringes 51b at the time of cutting the removal part 60c (FIG. 8) of the collector 51 from the base material 60 (FIG. 8). That is, the joint 52 is included in the cut part 51d, forming the fringes 51b. The joint 52 partially joins the fringes 51b of the laminated collector tabs 51a. In the present embodiment, the joints 52 are spaced apart from each other. That is, each collector 51 includes the joints 52 separately. The number and position of the joints 52 illustrated in FIGS. 2, 4, and 5 are merely exemplary and not limited thereto. The number of joints 52 may be one.

FIG. 6 is a partial schematic and illustrative cross-sectional view of the collector 51 in the present embodiment. FIG. 7 is a partial schematic and illustrative cross-sectional view of the collector 51 in the present embodiment. As illustrated in FIGS. 5 and 6, each non-layered part 48 includes a first part 48a and a second part 48b. FIG. 5 illustrates the first part 48a and the second part 48b of the positive non-layered part 48A.

The first part 48a extends from the positive active-material-containing layer 42 or the negative active-material-containing layer 46. The first part 48a constitutes part of the collector tabs 51a. The second part 48b is connected to the first part 48a, constituting another part of the collector tabs 51a. The second part 48b includes the fringes 51b, a thickness-varying part 48c, and a thick-thickness part 48d. The thickness-varying part 48c increases in thickness as further away from the first part 48a. The thick-thickness part 48d is thickest in thickness in the non-layered part 48 and in the collector tabs 51a. The thick-thickness part 48d is, for example, 1.2 times or more larger in thickness (maximum thickness) than the first part 48a. In FIGS. 5 and 6, the thickness of the thick-thickness part 48d is denoted by T1, and the thickness (maximum thickness) of the first part 48a is denoted by T2. In the example in FIG. 6, the thickness T1 of the thick-thickness part 48d is 67 µm, and the thickness T2 of the first part 48a is 20 µm, for example. FIG. 7 illustrates a collector tab 51a different from the collector tab 51a of the non-layered part 48 illustrated in FIG. 6. In the example in FIG. 7, the thickness T1 of the thick-thickness part 48d is 20 µm, and the thickness T2 of the first part 48a is 13 µm, for example. The thickness T1 of the thick-thickness part 48d and the thickness T2 of the first part 48a are not limited to the examples above. The first part 48a is also referred to as a thin-thickness part.

As illustrated in FIG. 2, in the positive collector 51A, as an example, the laminated parts of the positive non-layered part 48A in the X direction, placed on legs 26a of the positive electrode lead 26 in the X direction are joined together by, for example, ultrasonic welding. In the X direction at least the front end of the positive collector 51A is narrower in width than the electrode assembly 25 (FIG. 2). In the negative collector 51B, as an example, the laminated parts of the negative non-layered part 48B in the X direction, placed on legs 27a of the negative electrode lead 27 in the X direction are joined together by, for example, ultrasonic welding. In the X direction at least the front end of the negative collector 51B is narrower in width than the electrode assembly 25 (FIG. 2). FIG. 3 illustrates the laminated parts of the positive non-layered part 48A and the negative non-layered part 48B in the X direction before joining them.

The separators 33 illustrated in FIG. 3 and other drawings have insulating property and are of an approximately rectangular (quadrangular) sheet (strip) form. In the lateral direction the separators 33 are shorter in length (width) than the positive collector 41 and the negative collector 45. The size of the separators 33 is not limited thereto.

The separators 33 are a porous film or a nonwoven fabric made of, for example, a polymer such as polyolefin such as polyethylene and polypropylene, cellulose, polyethylene terephthalate, polyester, polyvinyl alcohol, polyimide, polyamide, polyamide-imide, polytetrafluoroethylene, and vinylon. In view of thinness and mechanical strength, the separator may be preferably a nonwoven fabric containing cellulose fibers as an example. The separators 33 may be made of one material or two or more materials combined.

The electrolyte can be, for example, a nonaqueous electrolyte. The nonaqueous electrolyte may be, for example, of a liquid form prepared by dissolving an electrolyte in an organic solvent or of a gel form being a composite of a liquid electrolyte and a polymer material.

The liquid nonaqueous electrolyte is preferably the one prepared by dissolving an electrolyte in an organic solvent at a concentration of 0.5 mol/L or more to 2.5 mol/L or less.

Examples of the electrolyte dissolved in an organic solvent include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluorometasulfonate (LiCF₃SO₃), and lithium bistrifluoromethylsulfonylimide (LiN(CF₃SO₂)₂), and mixtures thereof. The electrolyte is preferably difficult to be oxidized at a high potential, and LiPF₆ is most preferable.

Examples of the organic solvent include cyclic carbonates such as propylene carbonate (PC), ethylene carbonate (EC), and vinylene carbonate, chain carbonates such as diethyl carbonate (DEC), dimethyl carbonate (DMC), and ethyl methyl carbonate (EMC), cyclic ether such as tetrahydrofuran (THF), 2-methyl tetrahydrofuran (2-MeTHF), and dioxolane (DOX), chain ether such as dimethoxyethane (DME) and diethoxyethane (DEE), propionic acid ester such as propionic acid methyl (MP) and propionic acid ethyl (EP), γ-butyrolactone (GBL), acetonitrile (AN), and sulfolane (SL). These organic solvents can be used solely or as a mixture.

As illustrated in FIG. 2, the positive electrode lead 26 extends between the positive collector 51A of the electrode assembly 25 and the positive electrode terminal 23 to electrically connect the positive collector 51A and the positive electrode terminal 23. The positive electrode lead 26 includes a leg pair 26a and a connecting wall (not illustrated). The leg pair 26a extends in the vertical direction (Z direction) of the casing 20 with spacing along the thickness (X direction) of the casing 20. The leg pair 26a are joined to the positive collector 51A, placing the positive collector 51A in-between them. In the part of the positive collector 51A placed in-between the leg pair 26a, the laminated collector tabs 51a are joined together. The leg pair 26a and the positive collector 51A as well as the laminated collector tabs 51a are joined together by ultrasonic welding, for example. The ends of the leg pair 26a on the cover member 22 (wall 20f) side are connected to each other through the connecting wall. The connecting wall extends along the inner surface of the cover member 22 and is coupled to the positive electrode terminal 23. The positive electrode lead 26 is formed of a conductive material such as a metal material.

The negative electrode lead 27 extends between the negative collector 51B of the electrode assembly 25 and the negative electrode terminal 24 to electrically connect the negative collector 51B and the negative electrode terminal 24. The negative electrode lead 27 includes a leg pair 27a and a connecting wall (not illustrated). The leg pair 27a extends in the vertical direction (Z direction) of the casing 20 with spacing along the thickness (X direction) of the casing 20. The leg pair 27a are joined to the negative collector 51B, placing the negative collector 51B in-between them. In the part of the negative collector 51B placed in-between the leg pair 27a, the laminated collector tabs 51a are joined together. The leg pair 27a and the negative collector 51B as well as the laminated collector tabs 51a are joined together by ultrasonic welding, for example. The ends of the leg pair 27a on the cover member 22 (wall 20f) side are connected to each other through the connecting wall. The connecting wall extends along the inner surface of the cover member 22 and is coupled to the negative electrode terminal 24. The negative electrode lead 27 is formed of a conductive material such as a metal material.

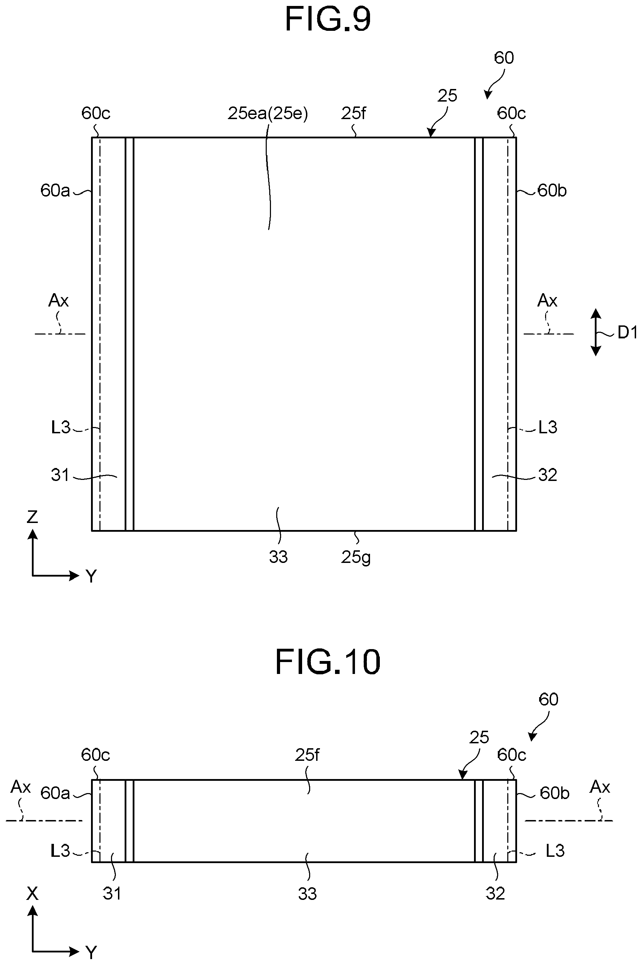

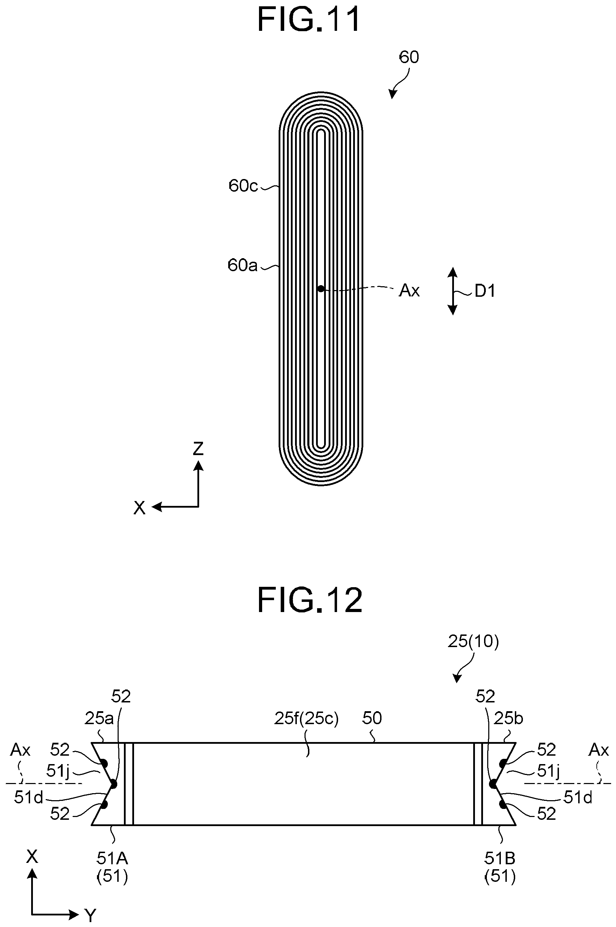

A manufacturing method of the battery 10 will now be described. FIG. 8 is a schematic illustrative perspective view of the electrode assembly 25 during a manufacturing process in the present embodiment. FIG. 9 is a schematic illustrative front view of the electrode assembly 25 during a manufacturing process in the present embodiment. FIG. 10 is a schematic illustrative plan view of the electrode assembly 25 during a manufacturing process in the present embodiment. FIG. 11 is a schematic illustrative side view of the electrode assembly 25 during a manufacturing process in the present embodiment.

As illustrated in FIGS. 8 to 11, the positive electrode 31, the negative electrode 32, and the separators 33 located between the positive electrode 31 and the negative electrode 32 are laminated and wound around the axis Ax to create the base material 60 including the electrode assembly 25. Next, the removal parts 60c as given parts are cut off from the axial opposite ends 60a and 60b of the base material 60 with a cutter (not illustrated), thereby forming the electrode assembly 25. The cut parts 51d are formed by cutting. In FIGS. 8 to 10, the boundary line L3 between the electrode assembly 25 and the removal part 60c is denoted by a dashed-dotted line. The base material 60 is cut by applying heat (melting) to the collector 51 (positive non-layered part 48A, negative non-layered part 48B). For example, in the present embodiment, a laser irradiation device serving as a cutter is provided to irradiate the collectors 51 (the positive non-layered part 48A and the negative non-layered part 48B) with laser light along the boundary line L3, thereby melting and cutting the collectors 51 (the positive non-layered part 48A and the negative non-layered part 48B) by heat. Thereby, the joint 52 (FIGS. 2, 4, and 5) is formed in the cut part 51d of the collector 51. Thus, in the present embodiment, the joint 52 is formed by melting the laminated collector tabs 51a of the collector 51 with laser light and solidifying them.

The laser light may be, for example, single-mode fiber laser or multi-mode fiber laser. The single-mode fiber laser is relatively small in optical diameter and high in energy density, therefore, it can efficiently cut the laminated collector tabs 51a at a desired position. The single-mode fiber laser is relatively small in optical diameter or cut width, forming a relatively small-size joint 52. In contrast, the multi-mode fiber laser is relatively large in optical diameter or cut width, forming a relatively large-size joint 52. The laser light may be separately emitted multiple times. This can reduce the output of the laser irradiation device per emission. Thus, it is possible to reduce energy loss or the influences of heat on the cut part 51d.

Cutting the base material 60 is not limited to cutting with laser light. For example, the base material 60 may be cut by ultrasonic cutting. The cutter may include a press device that can press the ends 60a and 60b of the base material 60 including the collectors 51 of the electrode assembly 25. The press device can press the ends 60a and 60b of the base material 60 to decrease the distance and the gap between the collector tabs 51a, thereby facilitating focusing of laser light. In addition, the collector tabs 51a are easily fused, and the cutting takt time can be shortened.

Next, the positive collector 51A, the negative collector 51B, and the positive electrode lead 26 and the negative electrode lead 27 coupled to the cover member 22 are joined together by ultrasonic welding. For example, the positive collector 51A and the negative collector 51B as well as the positive electrode lead 26 and the negative electrode lead 27 are held in-between the horn and the anvil of an ultrasonic welder, and decreased in thickness partially.

Next, the positive electrode lead 26 and the negative electrode lead 27 combined with the cover member 22, and the electrode assembly 25 are inserted into the accommodating member 21. Then, the cover member 22 is coupled to the accommodating member 21 while closing the opening (top-end opening) of the accommodating member 21. A given amount of electrolyte is then poured into the casing 20 through the liquid inlet of the cover member 22. The given amount refers to, for example, a sufficient amount to immerse the electrode assembly 25 in the casing 20. The liquid inlet is then sealed.

Next, a measuring method of the thickness T1 (FIG. 6) of the thick-thickness part 48d of the non-layered part 48 and the thickness T2 (FIG. 6) of the first part 48a will be described. First, before measurement, the surface (outer surface) of the non-layered part 48 including the fringes 51b (cut part 51d) is subjected to polishing. In the polishing process, the surface of the non-layered part 48 is mechanically polished, and the polished layer of the surface is removed by chemical polishing such as ion milling. In the polishing process, the surface of the non-layered part 48 may be mechanically polished and then chemically processed with aqueous sodium hydroxide. A scanning electron microscope is used for measurement to image the non-layered part 48 at observation magnification of 500 x, for example. Then, the thicknesses of the respective portions of the non-layered part 48 are measured from a result of the imaging. The observation magnification is not limited to this example.

As described above, in the present embodiment, the fringes 51b of the laminated collector tabs 51a of the collector 51 of the electrode assembly 25 are joined by the joint 52. With such a structure, for example, the laminated collector tabs 51a of the collector 51 are less likely to be out of alignment, when the battery 10 is applied with vibration. Thus, the collector 51 and the electrode assembly 25 become less deformable. Hence, as compared with non-joined fringes 51b of the collector tabs 51a of the collector 51, the collector 51 and the electrode assembly 25 can be enhanced in strength and rigidity, thereby improving the vibration resistance of the collector 51 and the electrode assembly 25.

In the present embodiment, the joint 52 serves to partially join the fringes 51b of the laminated collector tabs 51a of the collector 51. Owing to this structure, for example, at the time of occurrence of gas between the positive active-material-containing layer 42 and the negative active-material-containing layer 46 in the electrode assembly 25, the gas can be discharged to outside the electrode assembly 25 through the gap S between portions of the laminated collector tabs 51Aa including no joint 52.

In the present embodiment, the fringes 51b of the collector tabs 51a of the collector 51 include the thick-thickness part 48d being thickest in the non-layered part 48. Owing to such a structure, the thick-thickness part 48d of a relatively high strength can increase the strength of the fringes 51b. This can improve the vibration resistance of the collector 51 and the electrode assembly 25.

### <Other Embodiments>

Second to sixteenth embodiments will now be described with reference to FIGS. 12 to 42. Batteries 10 in the second to sixteenth embodiments are identical in configuration to the battery 10 in the first embodiment. The second to sixteenth embodiments can thus achieve similar effects based on a configuration similar to the first embodiment.

### <Second Embodiment>

FIG. 12 is a schematic illustrative plan view of the electrode assembly 25 of the battery 10 in the present embodiment. As illustrated in FIG. 12, the present embodiment mainly differs from the first embodiment in shape of the collector 51.

Specifically, in the present embodiment, the cut parts 51d of the ends 25a and 25b of the collectors 51 are depressed toward the axial center of the electrode assembly 25. The cut parts 51d are, for example, approximately V-shaped as viewed from the Z direction. The collector 51 is provided with depressions 51j defined by the cut parts 51d, facing the cut parts 51d. The depressions 51j are of groove from depressed toward the axial center of the electrode assembly 25 (collector 51) and extend between the opposite ends 25c and 25d of the electrode assembly 25. The depressions 51j are also referred to as cutouts, concavity, grooves, and a missing part.

Each cut part 51d is provided with the joint 52, as in the first embodiment. The joint 52 faces the depression 51j.

As described above, in the present embodiment, the collector 51 is provided with the depressions 51j, and each cut part 51d includes the joint 52, facing the depression 51j. By such a structure, the joint 52 serves to improve the strength of the cut part 51d, which makes the cut part 51d less deformable at the time of stress concentration on the cut part 51d due to the depression 51j.

### <Third Embodiment>

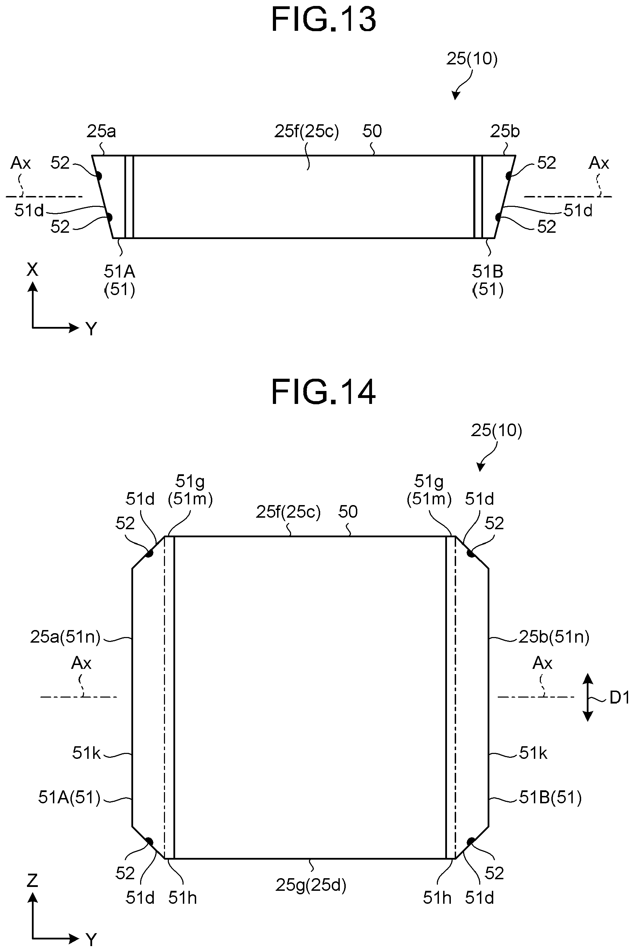

FIG. 13 is a schematic illustrative plan view of the electrode assembly 25 of the battery 10 in the present embodiment. As illustrated in FIG. 13, the present embodiment mainly differs from the first embodiment in shape of the collector 51.

Specifically, in the present embodiment, the cut parts 51d of the ends 25a and 25b of the collectors 51 are inclined relative to the axis Ax. As an example, the cut parts 51d are inclined relative to the axis Ax further away from the axial center of the electrode assembly 25 as closer to the wall 20c (FIG. 2) from the wall 20a (FIG. 2) of the casing 20, i.e., in the X direction. The cut parts 51d are provided with the joints 52, as in the first embodiment.

### <Fourth Embodiment>

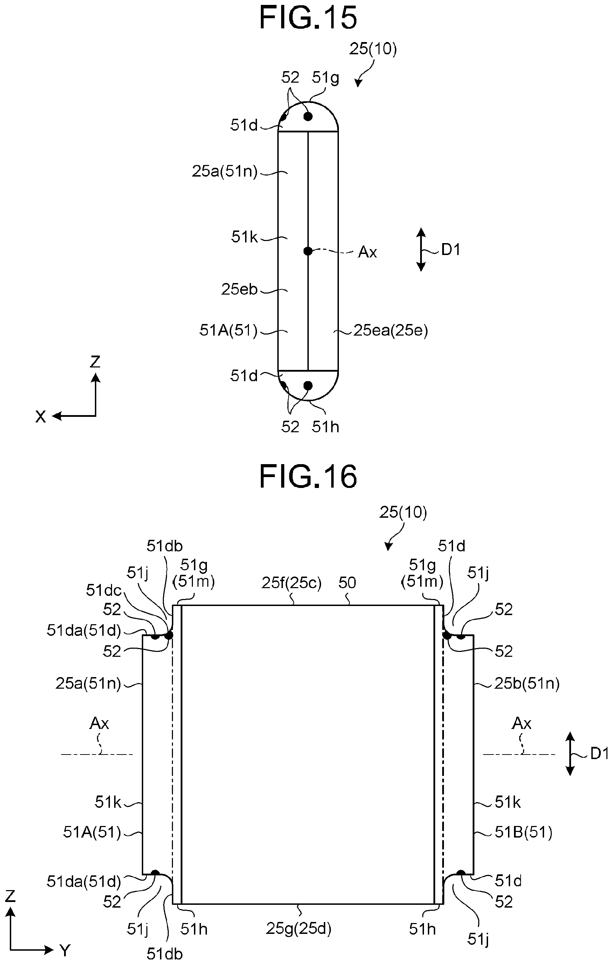

FIG. 14 is a schematic illustrative front view of the electrode assembly 25 of the battery 10 in the present embodiment. FIG. 15 is a schematic illustrative side view of the electrode assembly 25 of the battery 10 in the present embodiment. As illustrated in FIGS. 14 and 15, the present embodiment mainly differs from the first embodiment in shape of the collector 51.

Specifically, in the present embodiment, the electrode assembly 25 includes four cut parts 51d in the four corners. In detail, one of the cut parts 51d extends between the axial end 25a of the positive collector 51A and one end 51g of the positive collector 51A in the first direction D1. Another one of the cut parts 51d extends between the end 25a of the positive collector 51A and the other end 51h of the positive collector 51A in the first direction D1. Another one of the cut parts 51d extends between the axial end 25b of the negative collector 51B and one end 51g of the negative collector 51B in the first direction D1. The last one of the cut parts 51d extends between the axial end 25b of the negative collector 51B and the other end 51h of the negative collector 51B in the first direction D1. Thus, in the present embodiment, the collector 51 includes the cut part 51d in at least one (as an example, both) of the opposite ends 51g and 51h in the first direction D1.

The cut parts 51d are inclined relative to the axis Ax. The cut parts 51d are inclined relative to the axis Ax further away from the axis Ax as approaching the axial center of the electrode assembly 25 from linear parts 51k of the ends 25a and 25b extending in the first direction D1. The cut parts 51d each include the joint 52, as in the first embodiment.

The collector 51 further includes a base 51m and a connection 51n. The base 51m of the collector 51 extends from the power generator 50 by a given length in the axial direction and includes part of the base 25e and part of the turnback pair 25f and 25g. The connection 51n protrudes from the base 51m in the axial direction. The connection 51n includes part of the base 25e and the linear part 51k. The connection 51n is provided with cut parts 51d at both sides in the first direction D1. The connection 51n of such a structure includes part of the extension pair 25ea and 25eb, specifically, part of each of the extension pair 25ea and 25eb, and part of the turnback pair 25f and 25g, specifically, part of each of the turnback pair 25f and 25g. The connection 51n of the positive collector 51A is joined to the positive electrode lead 26 and is electrically connected to the positive electrode terminal 23 through the positive electrode lead 26. The connection 51n of the negative collector 51B is joined to the negative electrode lead 27 and is electrically connected to the negative electrode terminal 24 through the negative electrode lead 27. FIG. 14 depicts the boundary between the base 51m and the connection 51n by a dashed-dotted line, by way of example. The connection 51n is also referred to as a protrusion or a convexity.

### <Fifth Embodiment>

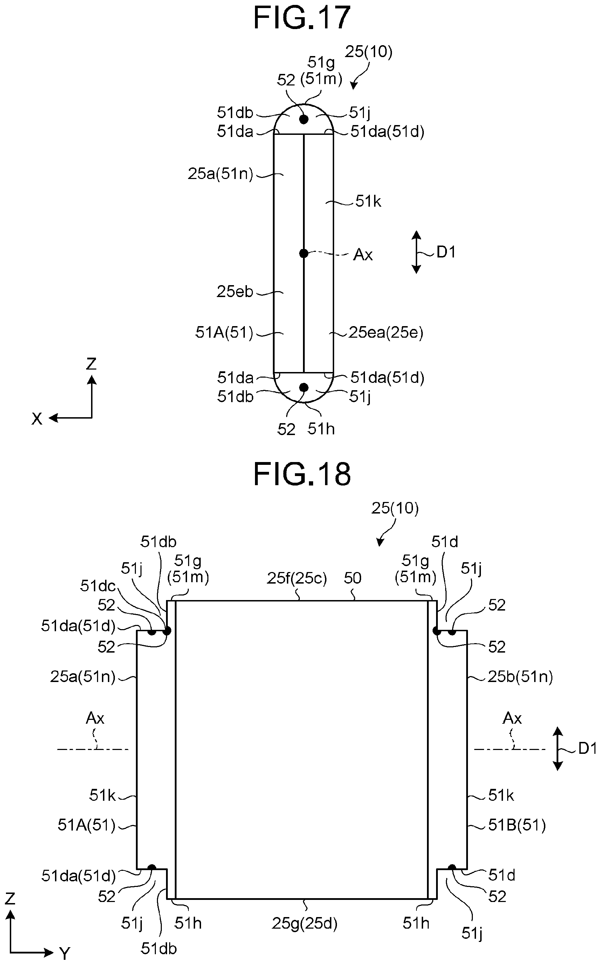

FIG. 16 is a schematic illustrative front view of the electrode assembly 25 of the battery 10 in the present embodiment. FIG. 17 is a schematic illustrative side view of the electrode assembly 25 of the battery 10 in the present embodiment. As illustrated in FIGS. 16 and 17, in the present embodiment, the electrode assembly 25 is provided with four cut parts 51d in the four corners, as in the fourth embodiment.

In the present embodiment, however, each cut part 51d includes a first extension 51da extending in the axial direction and a second extension 51db extending in the first direction D1. A connection 51dc between the first extension 51da and the second extension 51db has a curved shape. The connection 51dc is also referred to as a corner.

The depression 51j facing the cut part 51d is depressed relative to the linear part 51k toward the axial center of the electrode assembly 25. In other words, the depression 51j is depressed toward the center of the axis Ax and the center of the electrode assembly 25 in the first direction D1. The cut part 51d includes the joint 52. The joint 52 is included in at least one or more of the first extension 51da, the second extension 51db, and the connection 51dc. The joint 52 faces the depression 51j.

The collector 51 further includes a base 51m and a connection 51n. The base 51m of the collector 51 extends from the power generator 50 by a given length in the axial direction and includes part of the base 25e, part of the turnback pair 25f and 25g, and the second extension 51db of the cut part 51d. The second extension 51db is defined by an exposed part of the end including the connection 51n of the base 51m. The connection 51n protrudes from the base 51m in the axial direction. The connection 51n includes part of the base 25e, the linear part 51k, and the first extension 51da of the cut part 51d. The first extension 51da is defined by the end of the connection 51n in the first direction D1. The connection 51n includes cut parts 51d on both sides in the first direction D1. The connection 51n of such a structure includes part of an extension pair 25ea and 25eb, specifically, part of each of the extension pair 25ea and 25eb, and does not include at least one, specifically, both of the turnback pair 25f and 25g. That is, in the connection 51n, the positive electrode 31, the negative electrode 32, and the separators 33 are not folded back. FIG. 16 depicts the boundary between the base 51m and the connection 51n by a dashed-dotted line, by way of example.

### <Sixth Embodiment>

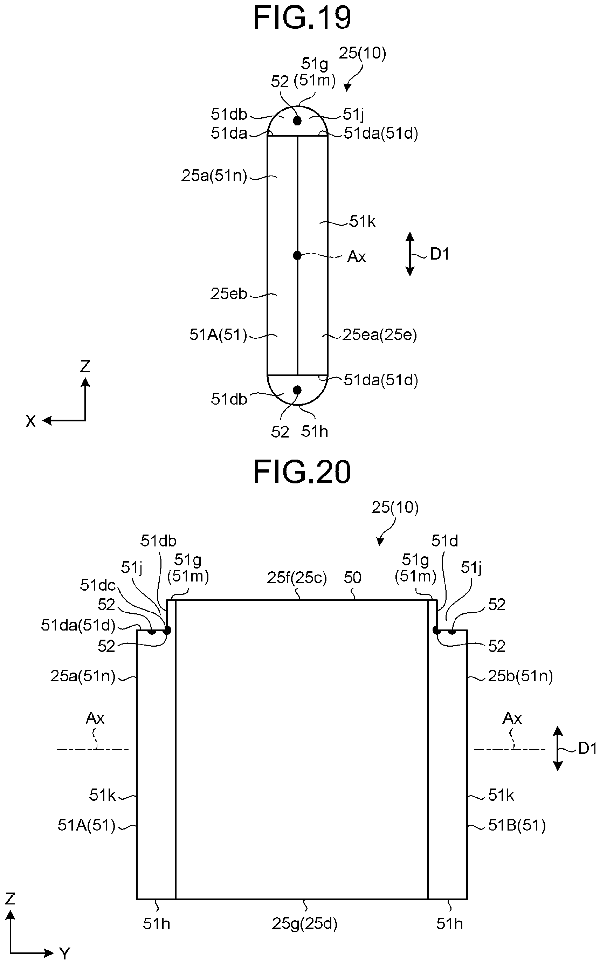

FIG. 18 is a schematic illustrative front view of the electrode assembly 25 of the battery 10 in the sixth embodiment. FIG. 19 is a schematic illustrative side view of the electrode assembly 25 of the battery 10 in the sixth embodiment.

As illustrated in FIGS. 18 and 19, in the present embodiment, the electrode assembly 25 includes four cut parts 51d in the four corners, as in the fifth embodiment. Each cut part 51d includes a first extension 51da and a second extension 51db. In the present embodiment, however, the connection 51dc between the first extension 51da and the second extension 51db is formed approximately at the right angle.

### <Seventh Embodiment>

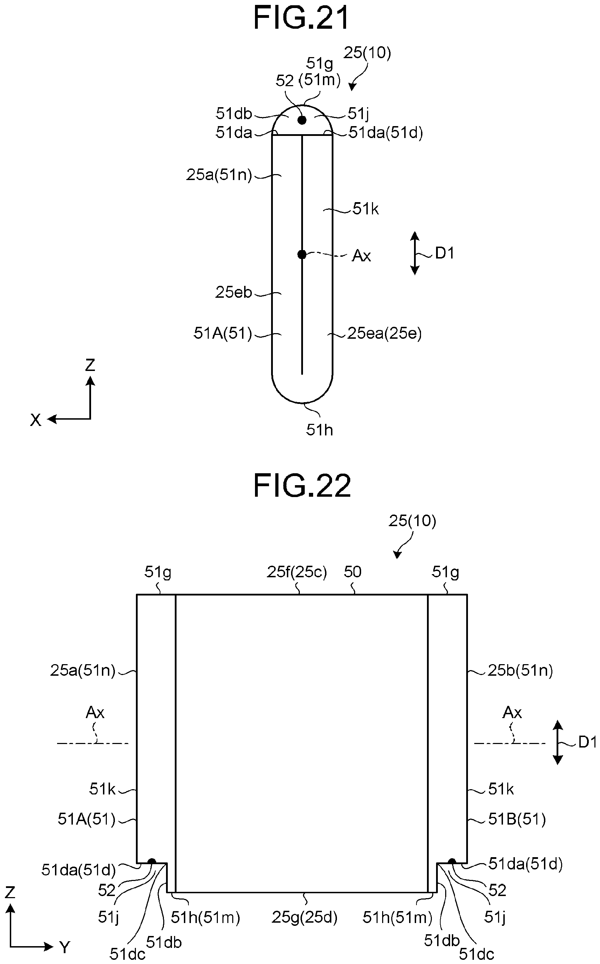

FIG. 20 is a schematic illustrative front view of the electrode assembly 25 of the battery 10 in the present embodiment. FIG. 21 is a schematic illustrative side view of the electrode assembly 25 of the battery 10 in the present embodiment. As illustrated in FIGS. 20 and 21, the present embodiment mainly differs from the first embodiment in shape of the collector 51.

Specifically, in the present embodiment, the electrode assembly 25 includes two cut parts 51d in two of the four corners. In detail, one of the cut parts 51d extends between the axial end 25a and one end 51g of the positive collector 51A in the first direction D1. The other cut part 51d extends between the axial end 25b and one end 51g of the negative collector 51B in the first direction D1. Thus, in the present embodiment, at least either (as an example, either) of the opposite ends 51g and 51h of the collector 51 in the first direction D1 is provided with the cut part 51d. The cut parts 51d are, for example, shaped the same as in the sixth embodiment illustrated in FIG. 18. The cut parts 51d may be shaped as in the fourth embodiment illustrated in FIG. 14 or in the fifth embodiment illustrated in FIG. 16.

The connection 51n of the collector 51 in the present embodiment includes part of each of the extension pair 25ea and 25eb and part of the turnback 25g and does not include the turnback 25f.

### <Eighth Embodiment>

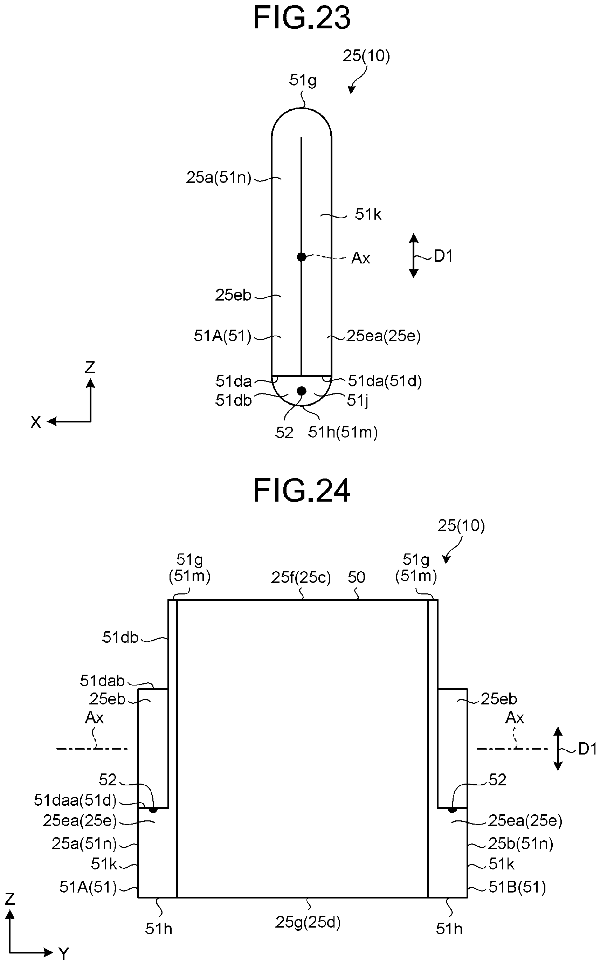

FIG. 22 is a schematic illustrative front view of the electrode assembly 25 of the battery 10 in the present embodiment. FIG. 23 is a schematic illustrative side view of the electrode assembly 25 of the battery 10 in the present embodiment. As illustrated in FIGS. 22 and 23, the present embodiment mainly differs from the first embodiment in shape of the collector 51.

Specifically, in the present embodiment, the electrode assembly 25 includes two cut parts 51d in two of the four corners. More specifically, one of the cut parts 51d extends between the end 25a and the other end 51h of the positive collector 51A in the first direction D1. The other cut part 51d extends between the axial end 25b and the other end 51h of the negative collector 51B in the first direction D1. Thus, in the present embodiment, the collector 51 includes the cut part 51d in at least either (as an example, either) of the opposite ends 51g and 51h in the first direction D1. The cut parts 51d are, for example, shaped the same as in the sixth embodiment illustrated in FIG. 18. The cut parts 51d may be shaped as in the fourth embodiment illustrated in FIG. 14 or in the fifth embodiment illustrated in FIG. 16.

The connection 51n of the collector 51 in the present embodiment includes part of each of the extension pair 25ea and 25eb and part of the turnback 25f and does not include the turnback 25g.

### <Ninth Embodiment>

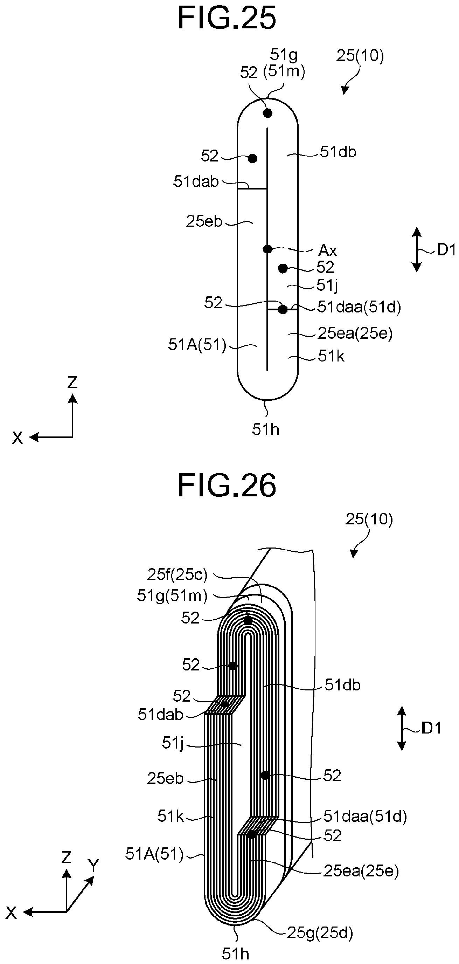

FIG. 24 is a schematic illustrative front view of the electrode assembly 25 of the battery 10 in the present embodiment. FIG. 25 is a schematic illustrative side view of the electrode assembly 25 of the battery 10 in the present embodiment. FIG. 26 is a schematic illustrative perspective view of the electrode assembly 25 of the battery 10 in the present embodiment. As illustrated in FIGS. 24 to 26, the present embodiment mainly differs from the first embodiment in shape of the collector 51.

Specifically, in the present embodiment, the collector 51 includes a base 51m and a connection 51n, as in the fifth embodiment. However, the connection 51n of the present embodiment includes part of the turnback 25g in addition to part of the base 25e and the linear part 51k. An extension pair 25ea and 25eb of the base 25e included in the connection 51n are different in length in the first direction D1. As an example, of the connection 51n, the extension 25ea is shorter in length than the extension 25eb in the first direction D1. Of the connection 51n, the extension 25ea may be longer in length than the extension 25eb in the first direction D1.

Each collector 51 includes one cut part 51d. The cut part 51d is located at one end 51g of the collector 51 in the first direction D1.

The cut part 51d includes two first extensions 51daa and 51dab and one second extension 51db. The first extension 51daa is defined by one end (top end) of one (extension 25ea) of the extension pair 25ea and 25eb of the connection 51n in the first direction D1, extending in the axial direction. The first extension 51dab is defined by one end (top end) of the other (extension 25eb) of the extension pair 25ea and 25eb of the connection 51n in the first direction D1, extending in the axial direction. The second extension 51db is defined by an exposed part of the end including the connection 51n of the base 51m, extending in the first direction D1. The second extension 51db connects two first extensions 51daa and 51dab.

The depression 51j facing the cut part 51d is depressed relative to the linear part 51k toward the axial center of the electrode assembly 25. The cut part 51d is provided with the joint 52. The joint 52 faces the depression 51j.

The connection 51n of the collector 51 in the present embodiment includes part of each of the extension pair 25ea and 25eb and part of the turnback 25g and does not include the turnback 25f.

In the present embodiment, in the manufacturing method of the battery 10, a shield plate (not illustrated) for blocking laser light is inserted in a given position of the base material 60 (FIG. 8) for cutting the base material 60 with a laser irradiation device. Such a shield plate enables adjustment of the number of sheets cut by laser light. The shield plate may be formed of, for example, a metal material. The metal material may be, for example, tungsten. Tungsten exhibits the highest melting point among metal materials, enabling a higher output of laser light. The shield plate may be adopted in the other embodiments.

### <Tenth Embodiment>

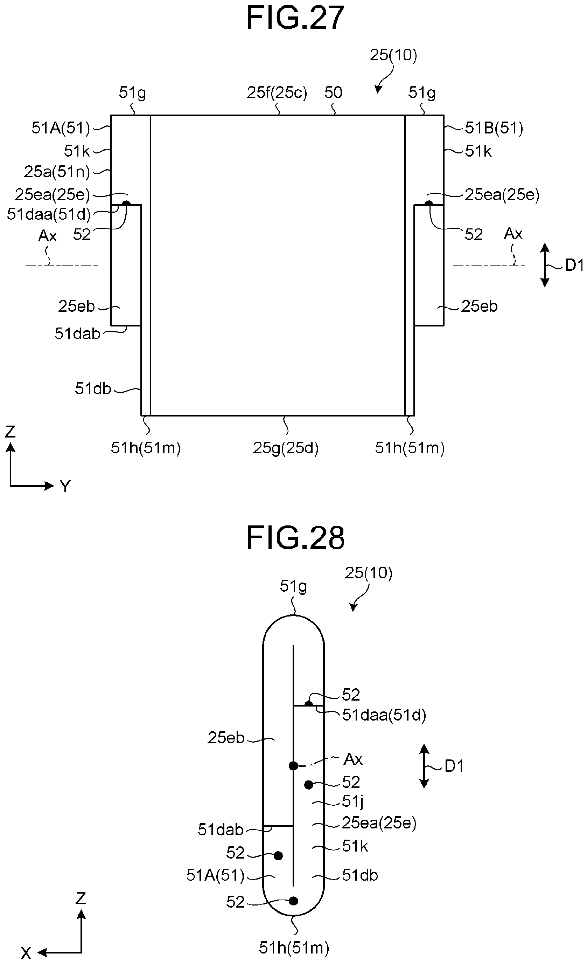

FIG. 27 is a schematic illustrative front view of the electrode assembly 25 of the battery 10 in the present embodiment. FIG. 28 is a schematic illustrative side view of the electrode assembly 25 of the battery 10 in the present embodiment. As illustrated in FIGS. 27 and 28, in the present embodiment, each collector 51 includes a base 51m, a connection 51n, and one cut part 51d, as in the ninth embodiment.

However, the collector 51 of the present embodiment is plane symmetric to the collector 51 of the ninth embodiment with respect to the XY plane passing through the center of the electrode assembly 25 (collector 51) in the first direction D1. Specifically, the connection 51n of the present embodiment includes part of the turnback 25f in addition to part of the base 25e and the linear part 51k. Of the connection 51n, the extension 25ea is shorter in length than the extension 25eb in the first direction D1. Of the connection 51n, the extension 25eb may be longer in length than the extension 25ea in the first direction D1.

The cut part 51d is located at the other end 51h of the collector 51 in the first direction D1. The cut part 51d includes two first extensions 51daa and 51dab and one second extension 51db. The first extension 51daa is defined by the other end (bottom end) of one (extension 25ea) of the extension pair 25ea and 25eb of the connection 51n in the first direction D1, extending in the axial direction. The first extension 51dab is defined by the other end (bottom end) of the other (extension 25eb) of the extension pair 25ea and 25eb of the connection 51n in the first direction D1, extending in the axial direction. The second extension 51db is defined by an exposed part of the end including the connection 51n of the base 51m, extending in the first direction D1. The second extension 51db connects two first extensions 51daa and 51dab.

The depression 51j facing the cut part 51d is depressed relative to the linear part 51k toward the axial center of the electrode assembly 25. The cut part 51d is provided with the joint 52. The joint 52 faces the depression 51j.

The connection 51n of the collector 51 in the present embodiment includes part of each of the extension pair 25ea and 25eb and part of the turnback 25f, and does not include the turnback 25g.

### <Eleventh Embodiment>

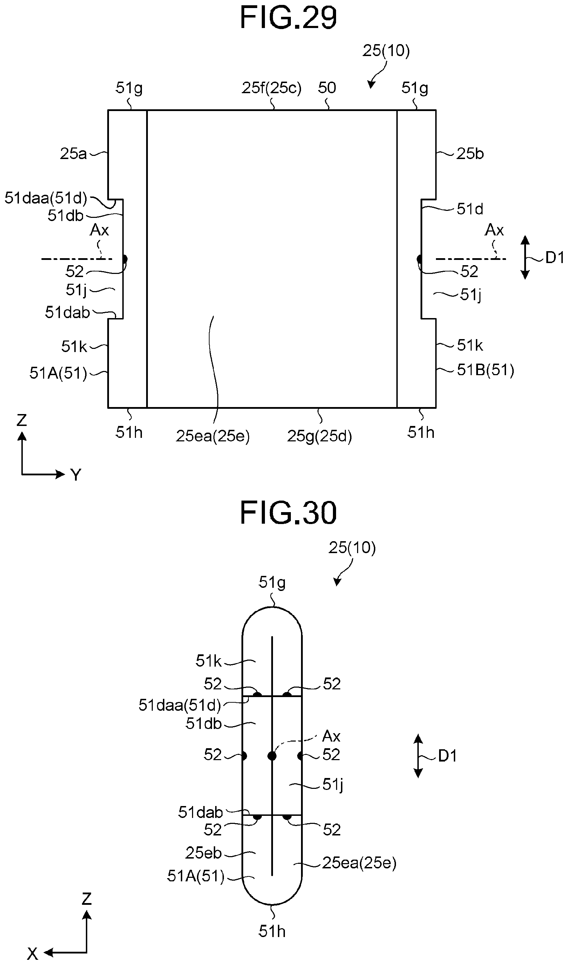

FIG. 29 is a schematic illustrative front view of the electrode assembly 25 of the battery 10 in the present embodiment. FIG. 30 is a schematic illustrative side view of the electrode assembly 25 of the battery 10 in the present embodiment. As illustrated in FIGS. 29 and 30, the present embodiment mainly differs from the first embodiment in shape of the collector 51.

Specifically, in the present embodiment, each collector 51 includes one cut part 51d in the middle part in the first direction D1. The cut part 51d has a concave shape from the linear part 51k toward the axial center of the electrode assembly 25.

The cut part 51d includes two first extensions 51daa and 51dab and one second extension 51db. The two first extensions 51daa and 51dab are spaced apart from each other in the first direction D1 and extend in the axial direction from the linear part 51k toward the axial center of the electrode assembly 25. The two first extensions 51daa and 51dab are located in the two extensions 25ea and 25eb of the base 25e, respectively. The second extension 51db extends in the first direction D1 and connects the ends of two first extensions 51daa and 51dab opposite the linear part 51k.

The depression 51j facing the cut part 51d is depressed relative to the linear part 51k toward the axial center of the electrode assembly 25, and passes through the collector 51 along the thickness (X direction) of the electrode assembly 25. The cut part 51d is provided with the joint 52. The joint 52 faces the depression 51j.

### <Twelfth Embodiment>

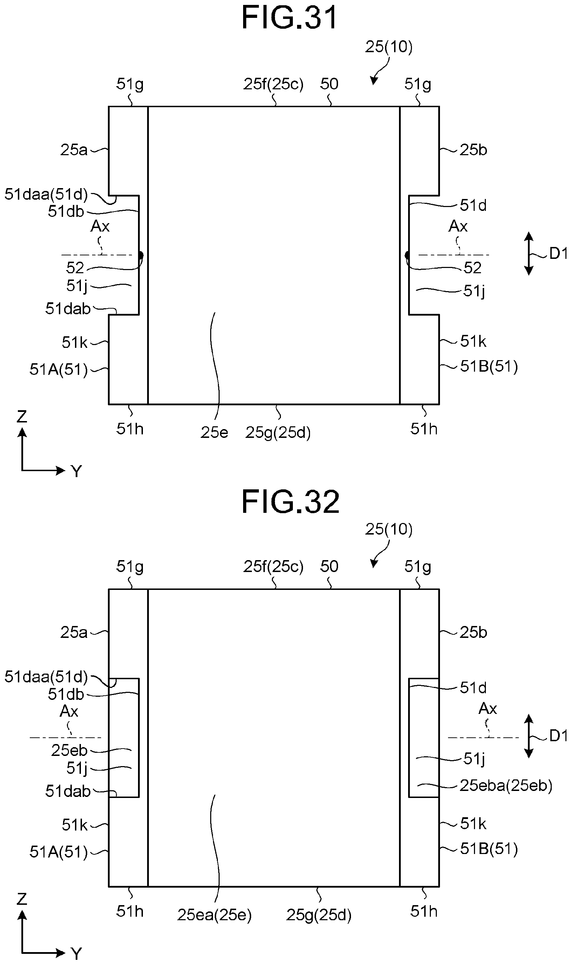

FIG. 31 is a schematic illustrative front view of the electrode assembly 25 of the battery 10 in the present embodiment. As illustrated in FIG. 31, in the present embodiment, each collector 51 includes one cut part 51d in the middle part in the first direction D1. The cut part 51d has a concave shape from the linear part 51k toward the axial center of the electrode assembly 25, as in the eleventh embodiment. The cut part 51d includes two first extensions 51daa and 51dab and one second extension 51db. In the present embodiment, however, the two first extensions 51daa are longer in length than the ones in the eleventh embodiment in the axial direction. That is, the depression 51j is greater in depth.

### <Thirteenth Embodiment>

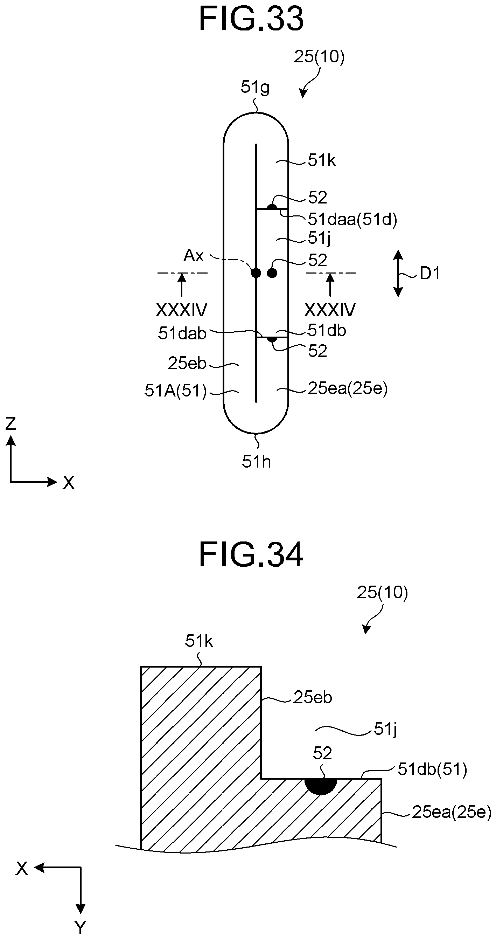

FIG. 32 is a schematic illustrative front view of the electrode assembly 25 of the battery 10 in the present embodiment. FIG. 33 is a schematic illustrative side view of the electrode assembly 25 of the battery 10 in the present embodiment. FIG. 34 is a schematic cross-sectional view of the electrode assembly 25 taken along line XXXIV-XXXIV in FIG. 33. As illustrated in FIGS. 32 to 34, the present embodiment mainly differs from the first embodiment in shape of the collector 51.

Specifically, in the present embodiment, each collector 51 includes one cut part 51d in the middle part in the first direction D1. The cut part 51d has a concave shape from the linear part 51k toward the axial center of the electrode assembly 25.

The cut part 51d includes two first extensions 51daa and 51dab and one second extension 51db. The two first extensions 51daa and 51dab are spaced apart from each other in the first direction D1 and extend in the axial direction from the linear part 51k toward the axial center of the electrode assembly 25. The two first extensions 51daa and 51dab are located in one (extension 25ea) of the two extensions 25ea and 25eb of the base 25e. The second extension 51db extends in the first direction D1 and connects the ends of two first extensions 51daa and 51dab opposite the linear part 51k.

The depression 51j facing the cut part 51d is depressed relative to the linear part 51k toward the axial center of the electrode assembly 25, and passes through the extension 25ea along the thickness (X direction) of the electrode assembly 25. The depression 51j faces the extension 25eb in the axial direction. The cut part 51d is provided with the joint 52. The joint 52 faces the depression 51j.

### <Fourteenth Embodiment>

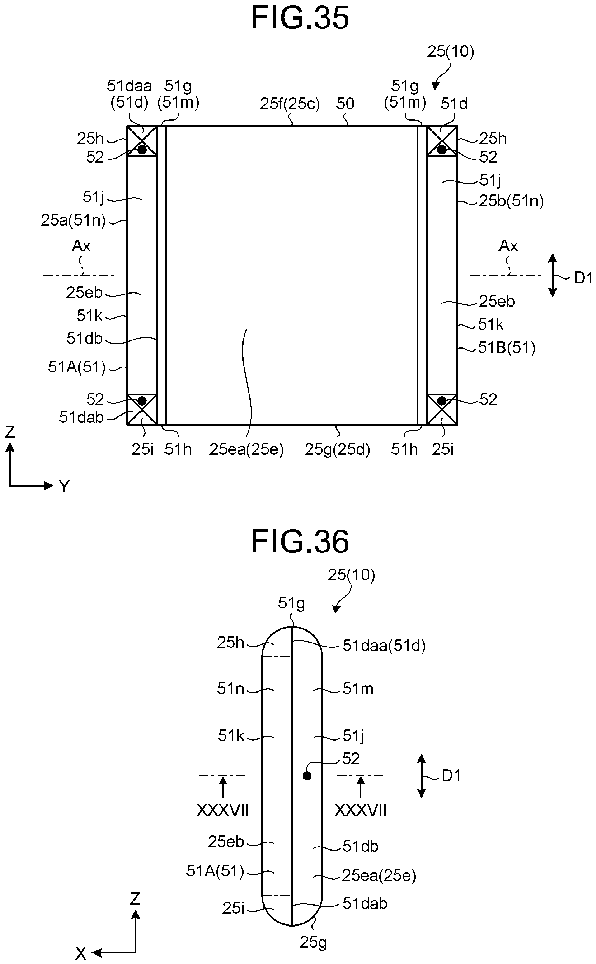

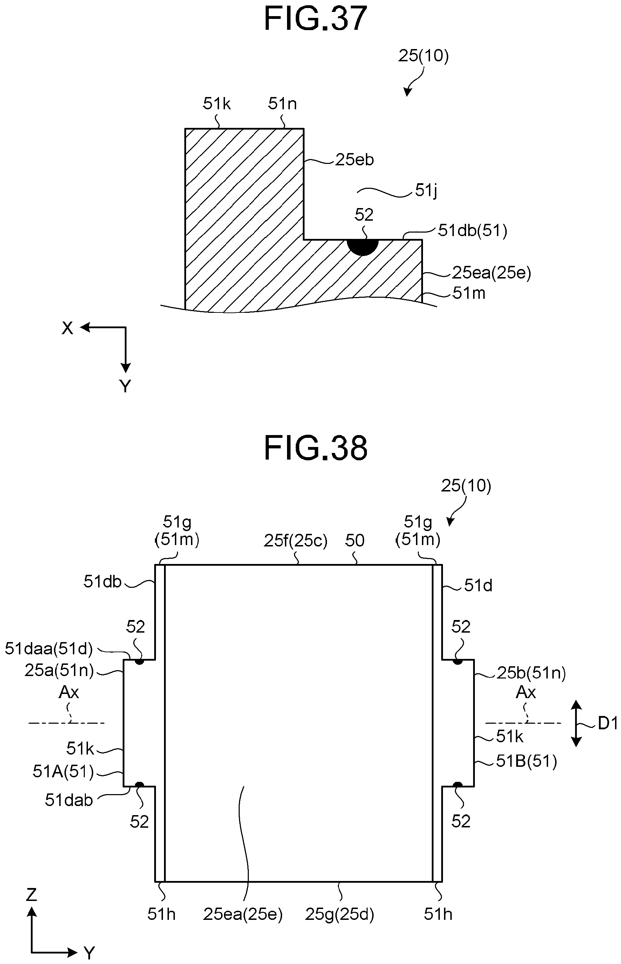

FIG. 35 is a schematic illustrative front view of the electrode assembly 25 of the battery 10 in the present embodiment. FIG. 36 is a schematic illustrative side view of the electrode assembly 25 of the battery 10 in the present embodiment. FIG. 37 is a schematic cross-sectional view of the electrode assembly 25 taken along line XXXVII-XXXVII in FIG. 36. As illustrated in FIGS. 35 to 37, the present embodiment mainly differs from the first embodiment in shape of the collector 51.

Specifically, in the present embodiment, the collector 51 includes a base 51m and a connection 51n, as in the fifth embodiment. However, the connection 51n of the present embodiment is located in a half region (left half in FIG. 36) of the collector 51 in the first direction D1, as viewed from the axial direction. The connection 51n includes part of one (extension 25eb) of the extension pair 25ea and 25eb of the base 25e and a pair of curves 25h and 25i and does not include the turnbacks 25f and 25g. The curves 25h and 25i are of the positive electrode 31 and the negative electrode 32 curving along the turnbacks 25f and 25g from the end of the extension 25ea in the first direction D1 in the range of about 90 degrees. That is, in the curves 25h and 25i, the positive electrode 31 and the negative electrode 32 are not folded back. The curves 25h and 25i extend in the axial direction from the turnbacks 25f and 25g. FIG. 36 depicts the boundary between the curves 25h, 25i and the extension 25ea by a dashed-dotted line.

Each collector 51 includes one cut part 51d. The cut part 51d includes two first extensions 51daa and 51dab and one second extension 51db. The first extensions 51daa and 51dab are defined by the ends, facing the first direction D1 (opposite to the X direction), of the pair of curves 25h and 25i of the connection 51n and extend in the axial direction. The second extension 51db is defined by an exposed part of the end including the connection 51n of the base 51m, extending in the first direction D1. That is, the second extension 51db includes the extension 25ea of the base 25e and the turnbacks 25f and 25g. The second extension 51db connects two first extensions 51daa and 51dab.

The depression 51j facing the cut part 51d is depressed relative to the linear part 51k toward the axial center of the electrode assembly 25. The cut part 51d is provided with the joint 52. The joint 52 faces the depression 51j.

The connection 51n of the collector 51 of the present embodiment includes part of the extension pair 25ea and 25eb, specifically, part of the extension 25eb, and does not include the extension 25ea and the turnback pair 25f and 25g.

### <Fifteenth Embodiment>

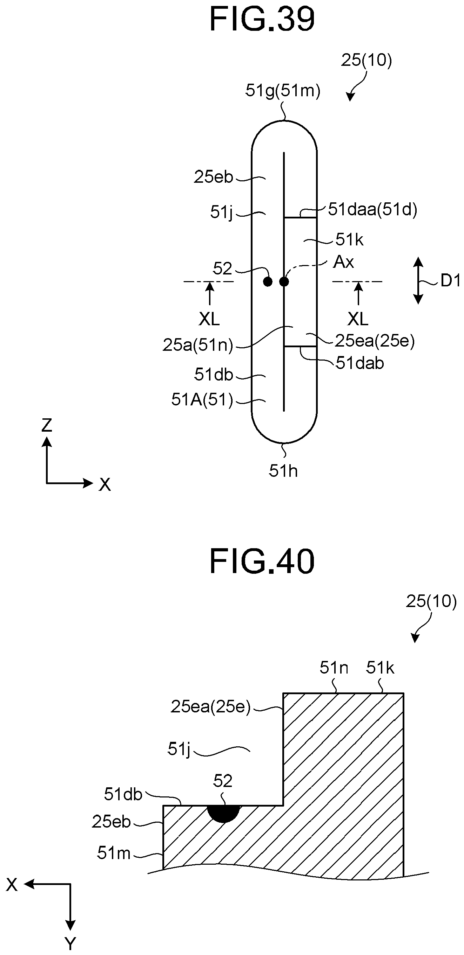

FIG. 38 is a schematic illustrative front view of the electrode assembly 25 of the battery 10 in the present embodiment. FIG. 39 is a schematic illustrative side view of the electrode assembly 25 of the battery 10 in the present embodiment. FIG. 40 is a schematic cross-sectional view of the electrode assembly 25 taken along line XL-XL in FIG. 39. As illustrated in FIGS. 38 to 40, the present embodiment mainly differs from the first embodiment in shape of the collector 51.

Specifically, in the present embodiment, the collector 51 includes a base 51m and a connection 51n, as in the fifth embodiment. However, the connection 51n in the present embodiment is located in the middle part of one (extension 25ea) of the extension pair 25ea and 25eb of the collector 51 in the first direction D1.

Each collector 51 includes one cut part 51d. The cut part 51d includes two first extensions 51daa and 51dab and one second extension 51db. The first extensions 51daa and 51dab are each defined by the end of the connection 51n facing in the first direction D1 (Z direction) or the opposite direction (opposite to Z direction), extending in the axial direction. The second extension 51db is defined by an exposed part of the end including the connection 51n of the base 51m, extending in the first direction D1. The second extension 51db includes part of the extensions 25ea and 25eb of the base 25e and part of the turnbacks 25f and 25g. The second extension 51db connects two first extensions 51daa and 51dab.

The depression 51j facing the cut part 51d is depressed relative to the linear part 51k toward the axial center of the electrode assembly 25. The cut part 51d is provided with the joint 52. The joint 52 faces the depression 51j.

The connection 51n of the collector 51 of the present embodiment includes part of the extension pair 25ea and 25eb, specifically, part of the extension 25ea, and does not include the extension 25eb and the turnback pair 25f and 25g.

### <Sixteenth Embodiment>

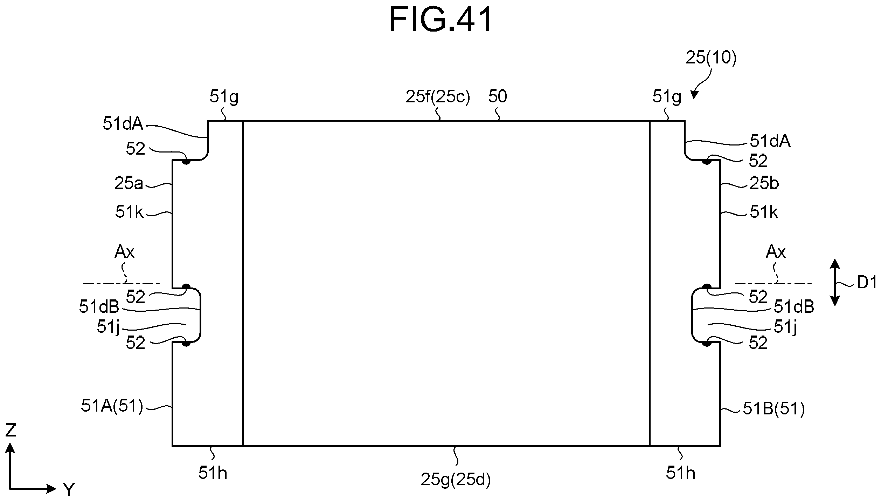

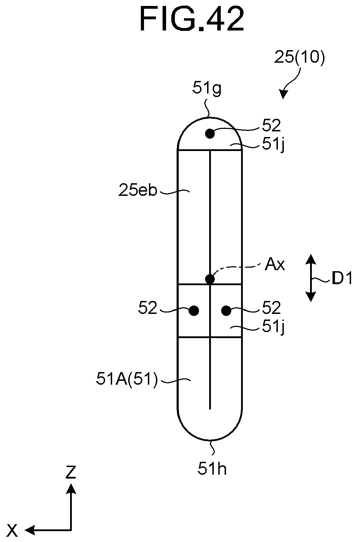

FIG. 41 is a schematic illustrative front view of the electrode assembly 25 of the battery 10 in the present embodiment. FIG. 42 is a schematic illustrative side view of the electrode assembly 25 of the battery 10 in the present embodiment. As illustrated in FIGS. 41 and 42, the present embodiment mainly differs from the first embodiment in shape of the collector 51.

Specifically, in the present embodiment, each collector 51 includes a plurality of (as an example, two) cut parts 51dA and 51dB of different shapes. The cut part 51dA is similar to the cut part 51d in the fifth embodiment illustrated in FIG. 16, and the cut part 51dB is similar to the cut part 51d in the eleventh embodiment illustrated in FIG. 29. The cut part 51dA and the cut part 51dB may be the same as or different in size from the cut part 51d illustrated in FIG. 16 and the cut part 51d illustrated in FIG. 29. Each of the cut parts 51dA and 51dB includes the joint 52.

While certain embodiments have been described, these embodiments have been presented by way of example only, and are not intended to limit the scope of the inventions. Indeed, the embodiments described herein may be embodied in different other forms; various omissions, substitutions, combinations, and changes may be made without departing from the spirit of the inventions. The above embodiments are incorporated in the scope and spirit of the inventions and in the accompanying claims and their equivalents. Specifications (structure, kind, direction, shape, size, length, width, thickness, height, number, arrangement, position, material, etc.) of the elements can be modified and carried out as appropriate.

## Claims

1. A battery comprising:
a casing;
a terminal supported by the casing;
an electrode assembly housed in the casing, the electrode assembly comprising
an electrode pair of a sheet form having different polarities from each other,
a separator located between the electrode pair, the electrode pair and the separator laminated and wound around an axis, and;
a collector located at an axial end of the electrode assembly, electrically connected to the terminal, and comprising a plurality of collector tabs, the collector tabs being part of one of the electrodes and laminated on each other with no other electrode and the separator placed in-between; and
a joint that joins fringes of the laminated collector tabs.

2. The battery according to claim 1, wherein
the joint partially joins the fringes of the laminated collector tabs.

3. The battery according to claim 1 or 2, wherein
the electrodes each comprise a collector element and an active material-containing layer containing an active material and laminated on part of the collector,
the collector includes a non-layered part of the collector element, the non-layered part on which the active material-containing layer is not laminated, and
the fringes have a thick-thickness part being thickest in thickness in the non-layered part.

4. The battery according to claim 3, wherein
the non-layered part includes
a first part extending from the active material-containing layer, and
a second part including the fringes, a thickness-varying part which increases in thickness as further away from the first part, and the thick-thickness part, and
the thick-thickness part is 1.2 times or more larger in thickness than the first part.

5. The battery according to claim 3 or 4, wherein
the collector element contains aluminum.

6. The battery according to any one of claims 1 to 5, wherein
the collector element includes a cut part including the fringes, and
the cut part includes the joint.

7. The battery according to any one of claims 2 to 5, wherein
the collector includes a cut part including the fringes, and
the cut part includes the joint,
the electrode assembly comprises
an extension pair located between opposite ends of the electrode assembly in a first direction orthogonal to the axis and extending from the electrodes in the first direction, and
a turnback pair located at opposite ends of the electrode assembly in the first direction, and formed by folding back the electrodes from one of the extension pair to the other, and
the collector comprises a connection electrically connected to the terminal, the connection including the cut part and part of the extension pair and not including at least one of the turnback pair.

8. The battery according to any one of claims 1 to 7, wherein
the fringes of the laminated collector tabs are aligned with each other.
